(19) Europäisches Patentamt
European Patent Office
Office européen des brevets

(11) **EP 3 588 392 A1**

(12) **EUROPEAN PATENT APPLICATION**
published in accordance with Art. 153(4) EPC

(43) Date of publication:
**01.01.2020 Bulletin 2020/01**

(51) Int Cl.:
**G06N 20/00** (2019.01)   **G06N 99/00** (2019.01)

(21) Application number: **18897535.3**

(22) Date of filing: **30.11.2018**

(86) International application number:
**PCT/JP2018/044108**

(87) International publication number:
**WO 2019/130974 (04.07.2019 Gazette 2019/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **25.12.2017 JP 2017247418**

(71) Applicant: SONY Corporation
**Tokyo 108-0075 (JP)**

(72) Inventors:
• IIDA, Hiroshi
**Tokyo 108-0075 (JP)**
• TAKAMATSU, Shingo
**Tokyo 108-0075 (JP)**

(74) Representative: **MFG Patentanwälte**
**Meyer-Wildhagen Meggle-Freund**
**Gerhard PartG mbB**
**Amalienstraße 62**
**80799 München (DE)**

(54) **INFORMATION PROCESSING DEVICE, INFORMATION PROCESSING METHOD, AND PROGRAM**

(57)     Proposed is a mechanism capable of more appropriately specifying grounds of prediction by a prediction model.

An information processing apparatus includes a control unit configured to extract a first characteristic amount positively contributing to a prediction result by a prediction model configured by a non-linear model and a second characteristic amount negatively contributing to the prediction result, from among characteristic amounts of input data input to the prediction model.

*FIG. 1*

**Description**

TECHNICAL FIELD

The present disclosure relates to an information processing apparatus, an information processing method, and a program.

BACKGROUND ART

In recent years, prediction using a prediction model (in other words, recognition model) configured by a non-linear model such as a neural network has been used in various fields. The prediction model configured by the non-linear model is a black box with an unknown internal behavior. Therefore, it has been difficult to specify grounds of prediction, for example, how much a characteristic amount, of characteristic amounts of data input to the prediction model, contributes to a prediction result.

With regard to the contribution of the characteristic amount, Patent Document 1 below discloses a technology for extracting, in extracting an explanatory variable to be used for leaning a prediction model from explanatory variables included in teacher data, the explanatory variable on the basis of the magnitude of a contribution calculated for each explanatory variable.

CITATION LIST

PATENT DOCUMENT

Patent Document 1: Japanese Patent Application Laid-Open No. 2017-123088

SUMMARY OF THE INVENTION

PROBLEMS TO BE SOLVED BY THE INVENTION

However, the technology disclosed in Patent Document 1 above merely extracts the explanatory variable contributing to a direction to enhance learning accuracy of the prediction model, in other words, a positively contributing characteristic amount. In other words, the technology disclosed in Patent Document 1 above is based on a precondition that all the characteristic amounts of data to be input to the prediction model positively contribute, and the technology is insufficient as a technology for specifying the grounds of prediction.

Therefore, the present disclosure proposes a mechanism capable of more appropriately specifying grounds of prediction by a prediction model.

SOLUTIONS TO PROBLEMS

According to the present disclosure, provided is an information processing apparatus including a control unit configured to extract a first characteristic amount positively contributing to a prediction result by a prediction model configured by a non-linear model and a second characteristic amount negatively contributing to the prediction result, from among characteristic amounts of input data input to the prediction model.

Furthermore, according to the present disclosure, provided is an information processing method executed by a processor, the method including extracting a first characteristic amount positively contributing to a prediction result by a prediction model configured by a non-linear model and a second characteristic amount negatively contributing to the prediction result, from among characteristic amounts of input data input to the prediction model.

Furthermore, according to the present disclosure, provided is a program for causing a computer to function as a control unit configured to extract a first characteristic amount positively contributing to a prediction result by a prediction model configured by a non-linear model and a second characteristic amount negatively contributing to the prediction result, from among characteristic amounts of input data input to the prediction model.

EFFECTS OF THE INVENTION

As described above, according to the present disclosure, a mechanism capable of more appropriately specifying grounds of prediction by a prediction model is provided. Note that the above-described effect is not necessarily restrictive, and any one of effects described in the present specification or any another effect obtainable from the present specification may be exhibited in addition to or in place of the above-described effect.

BRIEF DESCRIPTION OF DRAWINGS

Fig. 1 is a diagram for describing a black box property of a non-linear model.
Fig. 2 is a diagram for describing an outline of a comparative example.
Fig. 3 is a diagram for describing an algorithm according to the comparative example.
Fig. 4 is a diagram for describing a prediction problem in which a characteristic amount negatively contributing to a prediction result exists.
Fig. 5 is a diagram for describing a case in which an information processing apparatus according to a comparative example solves the prediction problem illustrated in Fig. 4.
Fig. 6 is a diagram for describing a case in which the prediction problem illustrated in Fig. 4 is solved by a proposed technology.
Fig. 7 is a block diagram illustrating an example of a logical configuration of an information processing apparatus according to an embodiment of the present disclosure.
Fig. 8 is a diagram for describing an algorithm of characteristic amount extraction processing by the information processing apparatus according to the present embodiment.
Fig. 9 is a diagram for describing a first contribution calculation method according to the present embodiment.
Fig. 10 is a diagram for describing a second contribution calculation method according to the present embodiment.
Fig. 11 is a diagram for describing an example of a UI according to the present embodiment.
Fig. 12 is a diagram for describing an example of the UI according to the present embodiment.
Fig. 13 is a diagram for describing an example of the UI according to the present embodiment.
Fig. 14 is a diagram for describing an example of the UI according to the present embodiment.
Fig. 15 is a diagram for describing an example of the UI according to the present embodiment.
Fig. 16 is a flowchart illustrating an example of a flow of presentation processing of prediction grounds executed by the information processing apparatus according to the present embodiment.
Fig. 17 is a diagram for describing an example of a UI according to the present modification.
Fig. 18 is a diagram schematically illustrating a flow of sentence generation according to the present modification.
Fig. 19 is a diagram for describing details of a sentence generation model according to the present modification.
Fig. 20 is a block diagram illustrating an example of a hardware configuration of the information processing apparatus according to the present embodiment.

MODE FOR CARRYING OUT THE INVENTION

Favorable embodiments of the present disclosure will be described in detail with reference to the appended drawings. Note that, in the present specification and drawings, redundant description of a configuration element having substantially the same functional configuration is omitted by providing the same sign.
Note that the description will be given in the following order.

1. Introduction
2. Configuration example
3. Technical characteristics
4. Use case
5. Modification
6. Hardware configuration example
7. Conclusion

<<1. Introduction>>

(1) Black box property of non-linear model

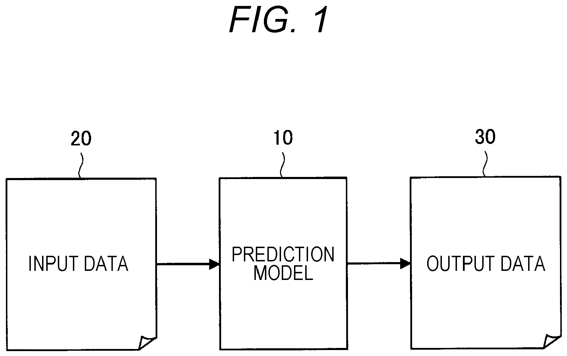

Fig. 1 is a diagram for describing a black box property of a non-linear model. As illustrated in Fig. 1, a prediction model 10 outputs output data 30 when input data 20 is input. For example, when an image is input as the input data 20, information indicating what is captured in the image is output as the output data 30. Furthermore, when a document is input as the input data 20, information indicating what category the document is about is output as the output data 30. Furthermore, when user information is input as the input data 20, information indicating what product a user corresponding to the user information will purchase is output as the output data 30.
The prediction model 10 is learned in advance on the basis of teacher data including a plurality of combinations of input data and output data to be output when the input data is input. In a case where the prediction model 10 is configured by a non-linear model, the prediction model 10 is a black box with an unknown internal behavior. Therefore, it is difficult to specify grounds of prediction by the prediction model 10. A neural network is an example of such a non-linear model.

A neural network typically has a network structure including three layers of an input layer, an intermediate layer, and an output layer, and in which nodes included in the respective layers are connected by a link. When the input data is input to the input layer, operations at the nodes and weighting at the links are performed in the order from the input layer to the intermediate layer, and from the intermediate layer to the output layer, and the output data is output from the output layer. Among neural networks, those having a predetermined number or more of layers are also referred to as deep learning.

It is known that neural networks can approximate arbitrary functions. A neural network can learn a network structure that fits teacher data by using a calculation technique such as back propagation. Therefore, by configuring a prediction model by a neural network, the prediction model is freed from restriction of expressiveness designed within a range that can be understood by a person. Meanwhile, the prediction model can be designed beyond the range that can be understood by a person. In that case, it is difficult to understand what the prediction model uses as the basis for prediction.

(2) Comparative example

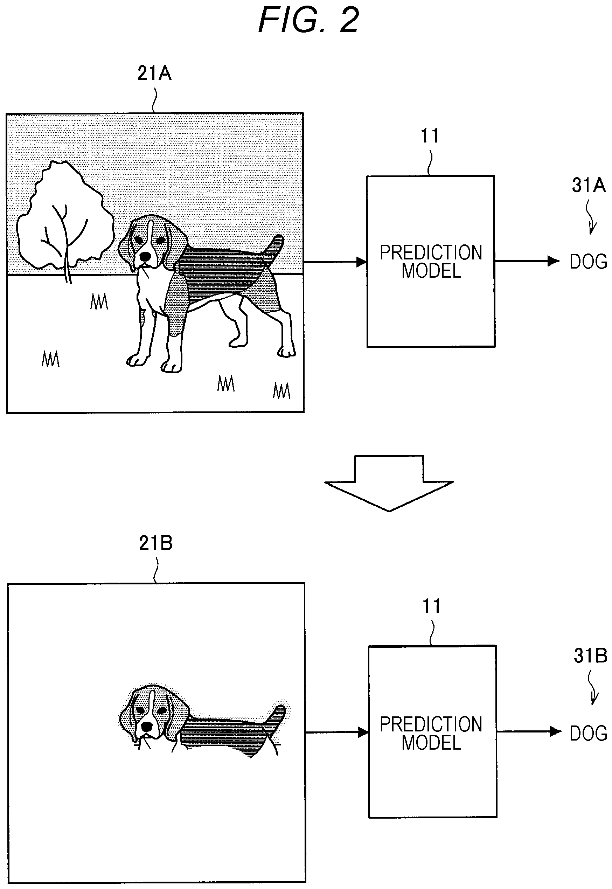

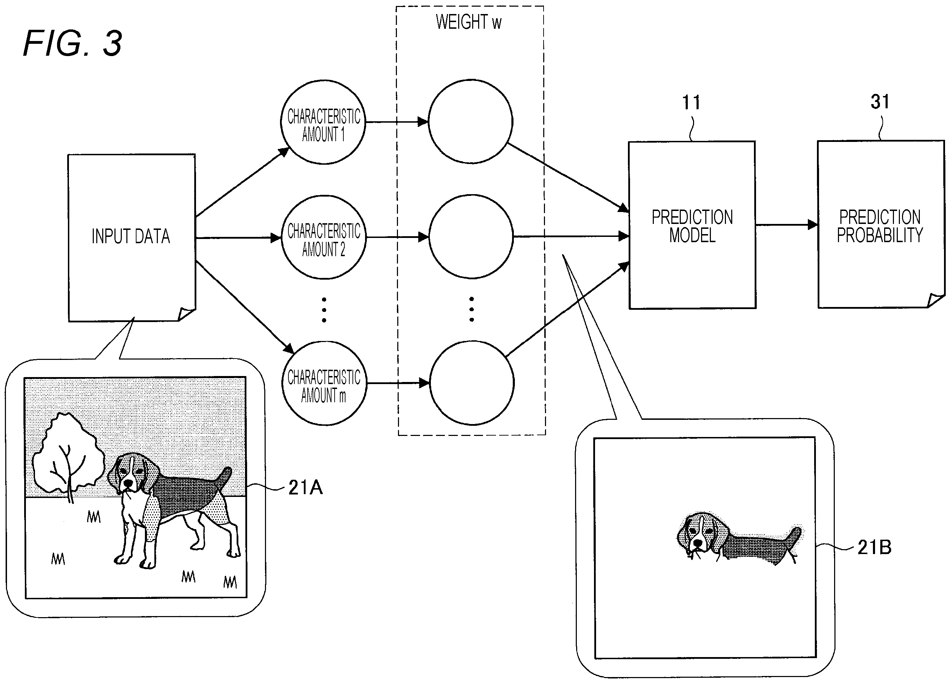

Hereinafter, a technology for specifying only a positively contributing characteristic amount as grounds of prediction will be described as a comparative example with reference to Fig. 2 and Fig. 3. Note that, in the present specification, to positively contribute means to improve a prediction probability predicted by a prediction model, and to negatively contribute means to reduce the prediction probability predicted by the prediction model.

Fig. 2 is a diagram for describing an outline of the comparative example. A prediction model 11 illustrated in Fig. 2 is an image recognizer configured by a non-linear model. When an image is input, the prediction model 11 outputs information indicating what is captured in the image. For example, when an image 21A of a dog is input, the prediction model 11 outputs information 31A indicating that the dog is captured in the image. When an image obtained by hiding a partial region of the image 21A of a dog is input to the prediction model 11, a prediction result may change. An information processing apparatus according to the comparative example inputs an image to the prediction model 11 while sequentially changing a hidden region, and searches for a region with which the prediction result is unchanged from when inputting the image 21A to the prediction model 11. Then, the information processing apparatus according to the comparative example outputs a region remaining after the searched region is hidden from the image 21A as the grounds of prediction. For example, it is assumed that, in a case where an image 21B obtained by hiding a portion without the dog from the image 21A is input in the process of search, information 31B indicating that the image 21B is an image with the dog is output, similarly to the case of inputting the image 21A. Then, the information processing apparatus according to the comparative example outputs the image 21B as the grounds of prediction.

Fig. 3 is a diagram for describing an algorithm according to the comparative example. First, the information processing apparatus according to the comparative example converts the image 21A into m characteristic amounts. The characteristic amount is, for example, a pixel value of each pixel included in the image 21A. Next, the information processing apparatus according to the comparative example applies a weight w to each of the characteristic amounts and inputs the characteristic amounts to the prediction model 11, thereby obtaining a prediction probability of from 0 to 1, both inclusive, as output data 31. The prediction probability here is a probability of predicting that a dog is captured in an input image.

The weight w takes a value from 0 to 1, both inclusive ($0 \leq w \leq 1$), and functions as a mask to leave a characteristic amount positively contributing to a prediction result by a prediction model 13 and to remove the other characteristic amounts. As illustrated in Fig. 3, the remaining characteristic amount obtained by masking a part of the characteristic amounts with the weight w is input to the prediction model 11. Specifically, data input to the prediction model 11 is the image 21B obtained by hiding a partial region from the image 21A. The probability of predicting that the dog is captured in the input image becomes higher as a larger number of positively contributing characteristic amounts remain without being masked with the weight w, in other words, a larger region with the dog captured remains without being masked.

Therefore, the information processing apparatus according to the comparative example obtains the weight w that maximizes the prediction probability. For example, the information processing apparatus according to the comparative example searches for w that minimizes a loss function illustrated in the following expression (1).
[Expression 1]

$$\min_{w} -f(w \odot x)$$

$$\cdots \ (1)$$

Note that f is the prediction model.

The above-described expression (1) takes a smaller value as the prediction probability in a case of inputting input data x to which the weight w is applied to the prediction model f is larger, in other words, the input data x to which the weight w is applied more positively contributes to the prediction result by the prediction model f. Therefore, the loss becomes smaller as the characteristic amounts remaining without being removed by the mask with the weight w are the more positively contributing characteristic amounts, and further, the characteristic amounts have a larger contribution to positively contribute. The information processing apparatus according to the comparative example specifies, as the grounds for prediction, the characteristic amount remaining without being removed by the mask with the searched weight w.

Note that the information processing apparatus according to the comparative example minimizes the loss function illustrated in the above expression (1) under a constraint condition illustrated in the following expression (2).
[Expression 2]

$$s.t. \quad \|w\|_2 \le c \qquad \cdots \ (2)$$

The constraint condition illustrated in the expression (2) is an Euclidean norm of the weight w being equal to or smaller than a predetermined value c, in other words, the number of characteristic amounts being equal to or smaller than a threshold value. Since the numbers of characteristic amounts to be extracted are limited by this constraint condition, characteristic amounts with a higher contribution can be extracted.

The weight w that minimizes the loss function illustrated in the above expression (1) is the weight w that maximizes the prediction probability. Therefore, in the comparative example, only the characteristic amount positively contributing to the improvement of the prediction probability is specified as the grounds of prediction. However, not all of the characteristic amounts of data input to the prediction model necessarily positively contribute. A characteristic amount negatively contributing to the prediction result may exist in the characteristic amounts of data input to the prediction model.

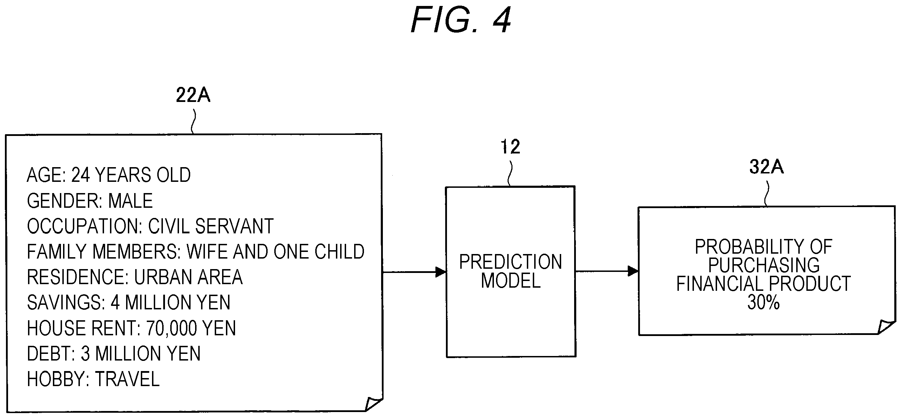

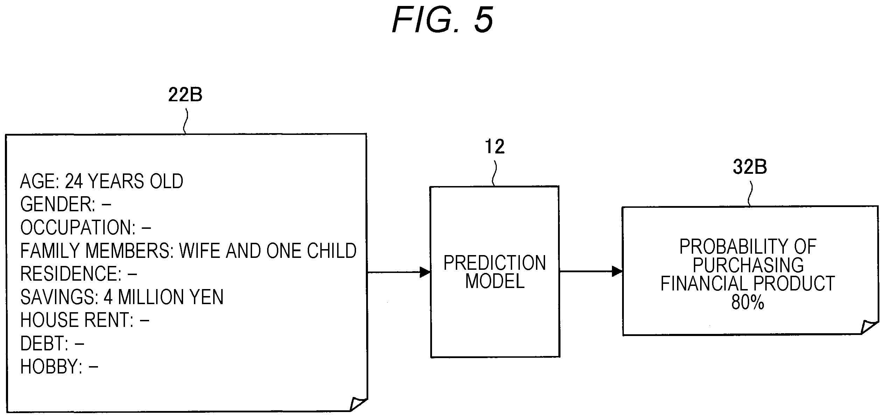

Hereinafter, the difficulty in the comparative example in specifying the grounds of prediction in a case where a characteristic amount negatively contributing to the prediction result exists will be described with reference to Figs. 4 and 5.

Fig. 4 is a diagram for describing a prediction problem in which a characteristic amount negatively contributing to a prediction result exists. When user information is input, a prediction model 12 illustrated in Fig. 4 outputs a probability of purchasing a financial product by a user corresponding to the user information. The input user information includes item type data including data of a plurality of data items such as age, gender, occupation, family members, residence, savings, house rent, debt, and hobby. Data for each data item, such as the age of 24 years old, is a characteristic amount. For example, when user information of a user of the age of 24 years old, the gender of a male, the occupation of a civil servant, the family members of a wife and one child, the residence of an urban area, the savings of 4 million yen, the house rent of 70,000 yen, the debt of 3 million yen, and the hobby of travel is input as input data 22A, output data 32A indicating that the probability of purchasing a financial product is 30% is output.

Fig. 5 is a diagram for describing a case in which the information processing apparatus according to the comparative example solves the prediction problem illustrated in Fig. 4. The information processing apparatus according to the comparative example extracts the characteristic amounts positively contributing to the improvement of the prediction probability. Therefore, only the characteristic amounts that improve the probability of purchasing a financial product, such as the age of 24 years old, the family members of a wife and one child, the savings of 4 million yen, and the like, are extracted. As illustrated in Fig. 5, when such extracted characteristic amounts are input as input data 22B, output data 32B indicating that the probability of purchasing a financial product is 80% is output. This is because, in the comparative example, the characteristic amount that reduces the probability of purchasing a financial product, in other words, the negatively contributing characteristic amount, is hidden with the weight w, and only the positively contributing characteristic amounts remain. This prediction probability of 80% is far from 30% illustrated in Fig. 4, which is the prediction probability output when all the user information is input. Therefore, it can be said that the characteristic amounts extracted by the comparative example are insufficient as the grounds of prediction.

Therefore, in the present disclosure, the above situation is considered as a point of view, and a mechanism capable of more appropriately specifying grounds of prediction by a prediction model is proposed. Specifically, a technology capable of specifying not only positively contributing characteristic amounts but also negatively contributing characteristic amounts as the grounds of prediction is proposed.

(3) Outline of the proposed technology

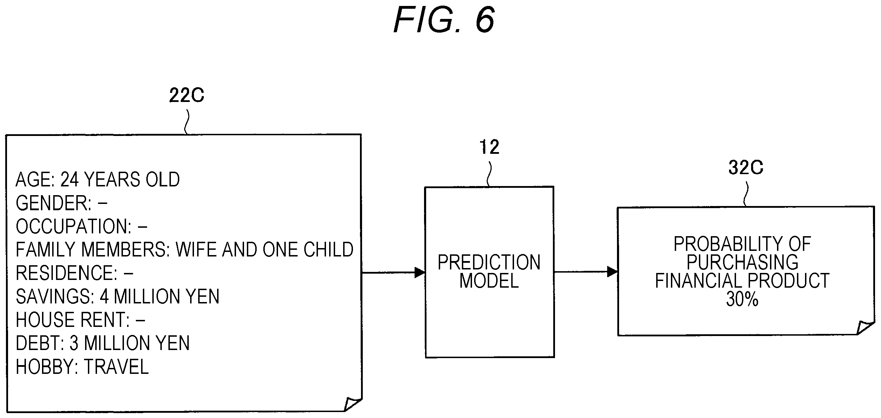

Fig. 6 is a diagram for describing a case in which the prediction problem illustrated in Fig. 4 is solved by a proposed technology. In the proposed technology, a characteristic amount positively contributing to the improvement of the prediction probability and a characteristic amount negatively contributing to the improvement of the prediction probability are extracted. Specifically, the characteristic amounts improving the probability of purchasing a financial product, such as the age of 24 years old, the family members of a wife and one child, and the savings of 4 million yen, and the characteristic amounts reducing the probability of purchasing a financial product, such as the debt of 3 million yen and the hobby of travel, are extracted. As illustrated in Fig. 6, when the characteristic amounts extracted by the proposed technology are input as input data 22C, output data 32C indicating that the probability of purchasing a financial product is 30% is output. This prediction probability of 30% is the same as 30% illustrated in Fig. 4, which is the prediction probability output when all the user information is input. Therefore, it can be said that the characteristic amounts extracted by the proposed technology are sufficient as the grounds of prediction. As described above, the proposed technology can hide the characteristic amounts not contributing to prediction and can appropriately extract the characteristic amounts contributing to the prediction from the user information.

Hereinafter, the proposed technology will be described in detail.

<<2. Configuration example>>

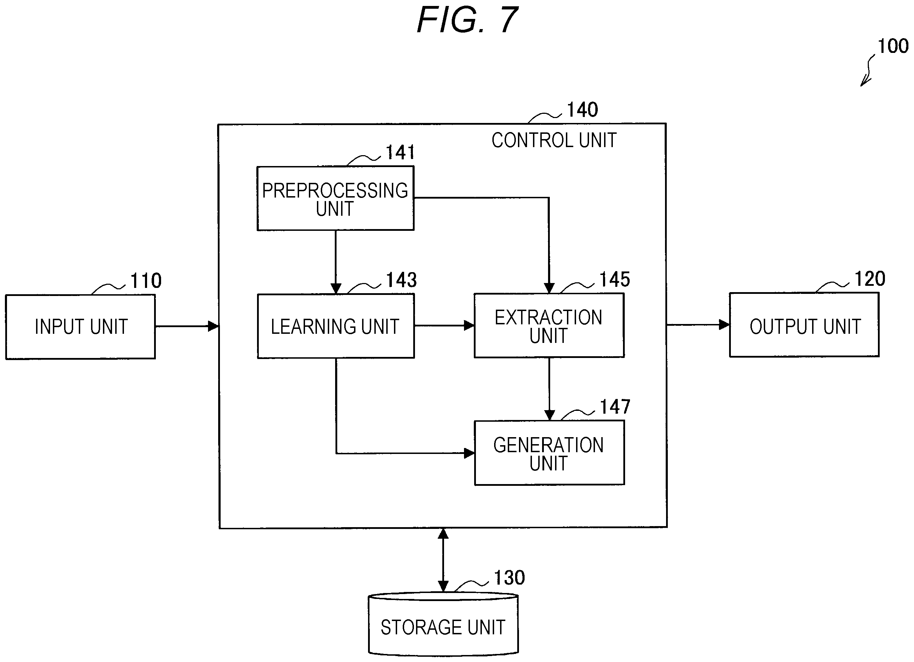

Fig. 7 is a block diagram illustrating an example of a logical configuration of an information processing apparatus according to an embodiment of the present disclosure. As illustrated in Fig. 7, an information processing apparatus 100 according to the present embodiment includes an input unit 110, an output unit 120, a storage unit 130, and a control unit 140.

The input unit 110 has a function to input information. The input unit 110 inputs various types of information such as teacher data for constructing a prediction model, input data to be input to the prediction model, and setting information related to characteristic amount extraction. The input unit 110 outputs the input information to the control unit 140.

The output unit 120 has a function to output information. The output unit 120 outputs various types of information such as output data output from the prediction model and the grounds of prediction. The output unit 120 outputs information output from the control unit 140.

The storage unit 130 has a function to temporarily or permanently store information. For example, the storage unit 130 stores a learning result regarding the prediction model.

The control unit 140 has a function to control an overall operation of the information processing apparatus 100. As illustrated in Fig. 7, the control unit 140 includes a preprocessing unit 141, a learning unit 143, an extraction unit 145, and a generation unit 147. The preprocessing unit 141 has a function to apply preprocessing to the input data. The learning unit 143 has a function to learn the prediction model configured by a non-linear model. The extraction unit 145 has a function to extract a characteristic amount from the input data input to the prediction model. The generation unit 147 has a function to generate the output information on the basis of an extraction result of the characteristic amount. Operation processing of each of the configuration elements will be described in detail below.

<<3. Technical characteristics>>

(1) Outline

An outline of operation processing by the information processing apparatus 100 according to the present embodiment will be described. A learned prediction model, item type data (for example, user information) of a calculation target of the contribution are input to the information processing apparatus 100. The information processing apparatus 100 extracts the positively contributing characteristic amount and the negatively contributing characteristic amount from the input item type data, and calculates the contributions of the extracted characteristic amounts. Furthermore, the information processing apparatus 100 may perform prediction using the input item type data and prediction using the extracted characteristic amounts. Then, the information processing apparatus 100 generates and outputs output information based on the processing results.

The present technology can be used, for example, for marketing, prevention of withdrawal of service, presentation of reasons for recommendation, input assistance for user profile, or the like. For example, a first user inputs, to the information processing apparatus 100, the learned prediction model and the user information of a second user. Then, the first user performs various measures according to a purpose for the second user on the basis of the output information.

The learning of the prediction model may be performed by the information processing apparatus 100. In that case, for example, the item type data and teacher data with a label corresponding to the user information are input to the information processing apparatus 100, and learning of the prediction model is performed.

Hereinafter, the operation processing by the information processing apparatus 100 according to the present embodiment will be described in detail.

(2) Preprocessing

The information processing apparatus 100 (for example, the preprocessing unit 141) performs preprocessing for the input data to be input to the prediction model. For example, the information processing apparatus 100 performs preprocessing called OneHotization. The OneHotization is processing of converting a characteristic amount into a characteristic amount vector in which one element is 1 and the other elements are 0.

For example, the data item of gender is expanded to three characteristic amounts of male, female, and others (unentered) and converted into a characteristic amount vector having three elements. Then, a characteristic amount vector in which the first element is 1 for men, the second element is 1 for women, and the third element is 1 for others is generated. The OneHotization can be applied to discrete values such as male/female or continuous values such as age. A characteristic amount vector in which all the characteristic amount vectors for each item converted in this manner are connected is input to the prediction model.

(3) Learning processing

The information processing apparatus 100 (for example, the learning unit 143) learns the prediction model. The information processing apparatus 100 learns parameters (various parameters such as a link, a weight, a bias, and an activation function) for constructing the prediction model that matches the teacher data by using a calculation technique such as back propagation. The above-described preprocessing is also performed for the teacher data.

When learning the prediction model, the information processing apparatus 100 may perform learning using a characteristic amount vector in which all of elements are 1, that is, learning using only a bias. By the learning, the information processing apparatus 100 can learn the prediction model that outputs an average value in a case where a characteristic amount vector in which all of elements are 0 is input to the prediction model.

The prediction model is configured by a non-linear model. The prediction model targeted by the present technology is a model having a black box property (also referred to as a black box model). For example, the prediction model may be configured by an arbitrary non-linear model such as a neural network, a support vector machine, or a hidden Markov model. Hereinafter, description will be given on the assumption that the prediction model is configured by a neural network.

(4) Characteristic amount extraction processing

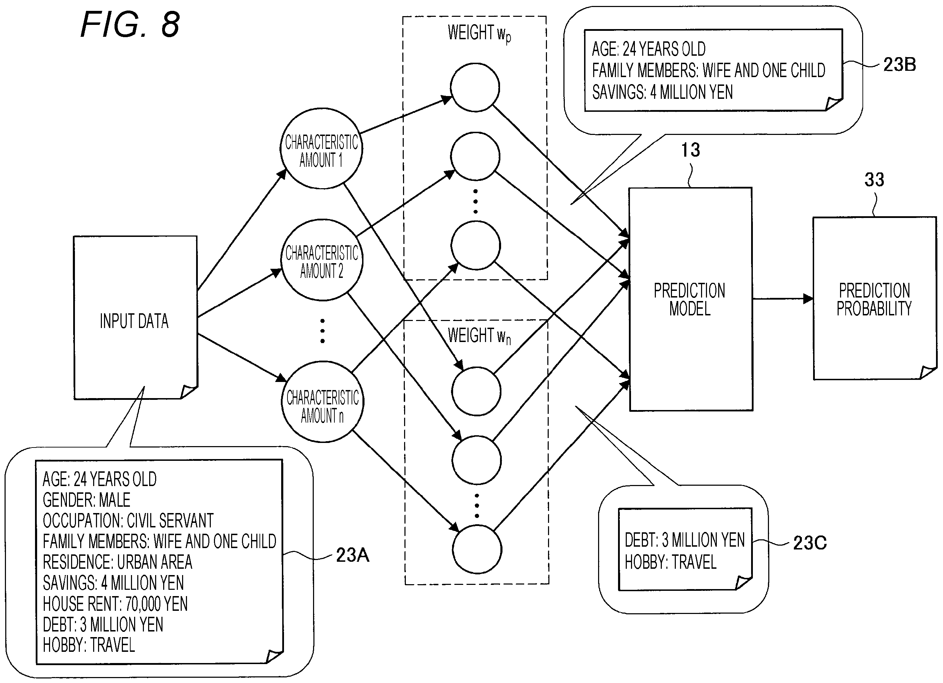

The information processing apparatus 100 (for example, the extraction unit 145) extracts a first characteristic amount positively contributing to a prediction result output from the prediction model configured by a non-linear model and a second characteristic amount negatively contributing to the prediction result, from among the characteristic amounts of the input data input to the prediction model. More specifically, the information processing apparatus 100 extracts a positively contributing characteristic amount having a relatively large contribution as the first characteristic amount, and a negatively contributing characteristic amount having a relatively large contribution as the second characteristic amount, from among the characteristic amounts of the input data. By the extraction, the information processing apparatus 100 can specify not only the positively contributing first characteristic amount but also the negatively contributing second characteristic amount as the grounds of prediction by the prediction model. Hereinafter, an algorithm of the characteristic amount extraction processing by the information processing apparatus 100 will be described with reference to Fig. 8.

Fig. 8 is a diagram for describing an algorithm of the characteristic amount extraction processing by the information processing apparatus 100 according to the present embodiment. The prediction model 13 illustrated in Fig. 8 outputs the probability of purchasing a financial product (a value from 0 to 1, both inclusive) as output data 33 when the user information is input as the input data, similarly to the prediction model 12 illustrated in Fig. 4 and the like. Specifically, first, the information processing apparatus 100 (preprocessing unit 141) converts input data 23A into n characteristic amounts. Next, the information processing apparatus 100 (extraction unit 145) applies a weight $w_p$ (first weight) to each of the characteristic amounts and inputs the characteristic amounts after the application to the prediction model 13, thereby obtaining the prediction probability. Similarly, the information processing apparatus 100 applies a weight $w_n$ (second weight) to each of the characteristic amounts and inputs the characteristic amounts after the application to the prediction model 13, thereby obtaining the prediction probability. Note that the information processing apparatus 100 may obtain the prediction probabilities by simultaneously inputting the characteristic amounts after application of the weight $w_p$ and the characteristic amounts after application of the weight $w_n$ to the prediction model 13.

The weight $w_p$ takes a value from 0 to 1, both inclusive ($0 \leq w_p \leq 1$), and functions as a mask to leave the characteristic amounts positively contributing to the prediction result by the prediction model 13 and to remove the other characteristic amounts. As illustrated in Fig. 8, a part of the characteristic amounts are masked with the weight $w_p$, and the remaining characteristic amounts are input to the prediction model 13. With the weight $w_p$, the prediction probability output from the prediction model 13 becomes higher as a larger number of the positively contributing characteristic amounts remain without being masked.

The weight $w_n$ takes a value from 0 to 1, both inclusive ($0 \leq w_n \leq 1$), and functions as a mask to leave characteristic amounts negatively contributing to the prediction result by the prediction model 13 and to remove the other characteristic amounts. As illustrated in Fig. 8, a part of the characteristic amounts are masked with the weight $w_n$, and the remaining characteristic amounts are input to the prediction model 13. With the weight $w_n$, the prediction probability output from the prediction model 13 becomes lower as a larger number of the negatively contributing characteristic amounts remain without being masked.

Therefore, the information processing apparatus 100 obtains weights $w_p$ and $w_n$ that are compatible with the weight $w_p$ that maximizes the prediction probability and the weight $w_n$ that minimizes the prediction probability. For example, the information processing apparatus 100 obtains $w_p$ and $w_n$ that minimize the loss function illustrated in the following expression (3).

[Expression 3]

$$\min_{w_p, w_n} -f\left(w_p \odot x\right) + f\left(w_n \odot x\right) \qquad \cdots \ (3)$$

The first term of the above-described expression (3) takes a smaller value as the prediction probability in a case of inputting input data x to which the weight $w_p$ is applied to the prediction model f is larger, in other words, the input data x to which the weight $w_p$ is applied more positively contributes to the prediction result by the prediction model f. Therefore, the loss becomes smaller as the characteristic amounts remaining without being removed by the mask with the weight $w_p$ are the more positively contributing characteristic amounts, and further, the characteristic amounts have a larger contribution to positively contribute.

Meanwhile, the second term of the above-described expression (3) takes a smaller loss value as the prediction probability in a case of inputting input data x to which the weight $w_n$ is applied to the prediction model f is smaller, in other words, the input data x to which the weight $w_n$ is applied more negatively contributes to the prediction result by the prediction model f. Therefore, the loss becomes smaller as the characteristic amounts remaining without being removed by the mask with the weight $w_n$ are the more negatively contributing characteristic amounts, and further, the characteristic amounts have a larger contribution to negatively contribute.

The information processing apparatus 100 obtains weights $w_p$ and $w_n$ that minimize the prediction function including such first and second terms. Then, the information processing apparatus 100 extracts the characteristic amount remaining without being removed by the mask with the weight $w_p$ as the first characteristic amount, and the characteristic amount remaining without being removed by the mask with the weight $w_n$ as the second characteristic amount. Since both the first term for evaluating the positively contributing characteristic amount and the second term for evaluating the negatively contributing characteristic amount are included in the loss function, the positively contributing characteristic amount and the negatively contributing characteristic amount can be appropriately extracted. The information processing apparatus 100 specifies the first characteristic amount and the second characteristic amount extracted in this manner as the grounds of prediction.

However, the information processing apparatus 100 minimizes the loss function illustrated in the above expression (3) under a constraint condition illustrated in the following expression (4).

[Expression 4]

$$s.t. \quad \left\|w_p\right\|_2 \leq c_1$$

$$\left\|w_n\right\|_2 \leq c_2$$

$$\left\|f\left(w_p \odot x\right) - f\left(w_n \odot x\right) - f(x)\right\| \leq c_3 \qquad \cdots \ (4)$$

The constraint condition illustrated in the expression (4) includes Euclidean norms of the weights $w_p$ and $w_n$ being equal to or smaller than predetermined values $c_1$ and $c_2$, respectively, in other words, the number of first characteristic amounts being equal to or smaller than a first threshold value and the number of second characteristic amounts being equal to or smaller than a second threshold value. Since the numbers of characteristic amounts to be extracted are limited by this constraint condition, characteristic amounts with a higher contribution can be extracted as the first characteristic amount and the second characteristic amount.

Moreover, the constraint condition illustrated in the above-described expression 4 includes a difference being equal to or smaller than a predetermined value $c_3$ (third threshold value), the difference being between a difference between a prediction result obtained by inputting the first characteristic amount to the prediction model and a prediction result obtained by inputting the second characteristic amount to the prediction model, and a prediction result obtained by inputting the input data to the prediction model. By the present constraint condition, learning is performed such that the prediction probability in a case of using only the extracted first characteristic amount and second characteristic amount, and the original prediction probability (the prediction result using all the user information) are as close as possible. Therefore, with the present constraint condition, the certainty of the weights $w_p$ and $w_n$ can be secured.

Note that the values of the predetermined values $c_1$, $c_2$, and $c_3$ can be arbitrarily designated. In particular, by designating the predetermined values $c_1$ and $c_2$, the number of first characteristic amounts and the number of second characteristic amounts to be extracted can be designated.

(5) Contribution calculation processing

The information processing apparatus 100 (for example, the extraction unit 145) calculates contributions of the first characteristic amount and the second characteristic amount. The contribution is a degree of contribution to the prediction result by the prediction model. There are various ways of calculating the contribution. Hereinafter, two types of calculation methods will be described as an example.

• First contribution calculation method

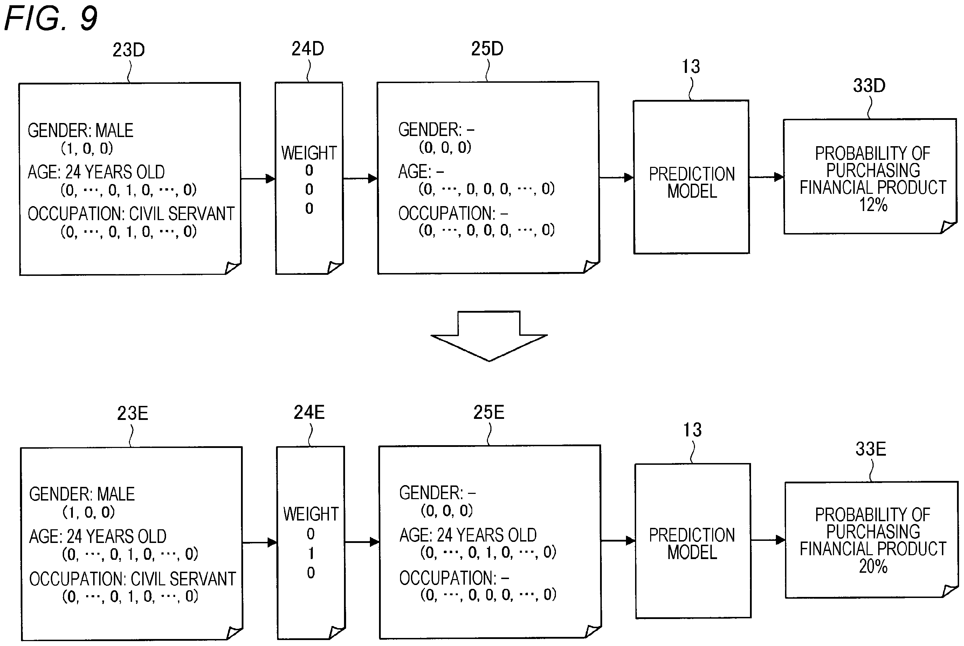

The first contribution calculation method is a method of adding the characteristic amount of the calculation target of the contribution to the input to the prediction model and calculating the contribution on the basis of change in the prediction result before and after the addition. Specifically, the information processing apparatus 100 calculates, as the contribution of the first characteristic amount and the second characteristic amount, a difference between an average value of the prediction results by the prediction model, and the prediction result obtained by inputting only one characteristic amount of the calculation target of the contribution to the prediction model. Hereinafter, the first contribution calculation method will be specifically described with reference to Fig. 9.

Fig. 9 is a diagram for describing the first contribution calculation method according to the present embodiment. Here, it is assumed that the characteristic amount of the calculation target of the contribution is the age of 24 years old.

As illustrated in Fig. 9, first, the information processing apparatus 100 applies a weight 24D in which all of weights are zero to a characteristic amount vector 23D of the input data to generate a characteristic amount vector 25D in which all of elements are 0, and inputs the characteristic amount vector 25D to the prediction model 13. Thereby, the information processing apparatus 100 obtains an average value of the prediction probabilities output from the prediction model 13 as output data 33D. For example, the average value of the probability of purchasing a financial product is calculated to be 12%.

Next, the information processing apparatus 100 applies, to a characteristic amount vector 23E of the input data, a weight 24E obtained by changing the weight corresponding to one characteristic amount of the calculation target of the contribution to 1 from the weight 24D. As a result, a characteristic amount vector 25E in which the element corresponding to the one characteristic amount of the calculation target of the contribution is 1 and all the other elements are 0 is obtained. The information processing apparatus 100 inputs the characteristic amount vector 25E to the prediction model 13. As a result, the information processing apparatus 100 obtains, as output data 33E, the prediction probability of a case of inputting only one characteristic amount of the calculation target of the contribution to the prediction model 13. For example, the probability of purchasing a financial product by the user of the age of 24 years old is calculated to be 20%.

Then, the information processing apparatus 100 calculates a difference between the prediction probabilities as the contribution of the characteristic amount. Specifically, the information processing apparatus 100 determines that the characteristic amount positively contributes in a case where the prediction probability is improved, the characteristic amount negatively contributes in a case where the prediction probability is reduced, and an absolute value of the difference is the magnitude of the contribution. In the present example, the probability of purchasing a financial product is improved from 12% to 20%, the information processing apparatus 100 determines that the contribution of the characteristic amount of the age of 24 years old is a positive contribution of 8%.

• Second contribution calculation method

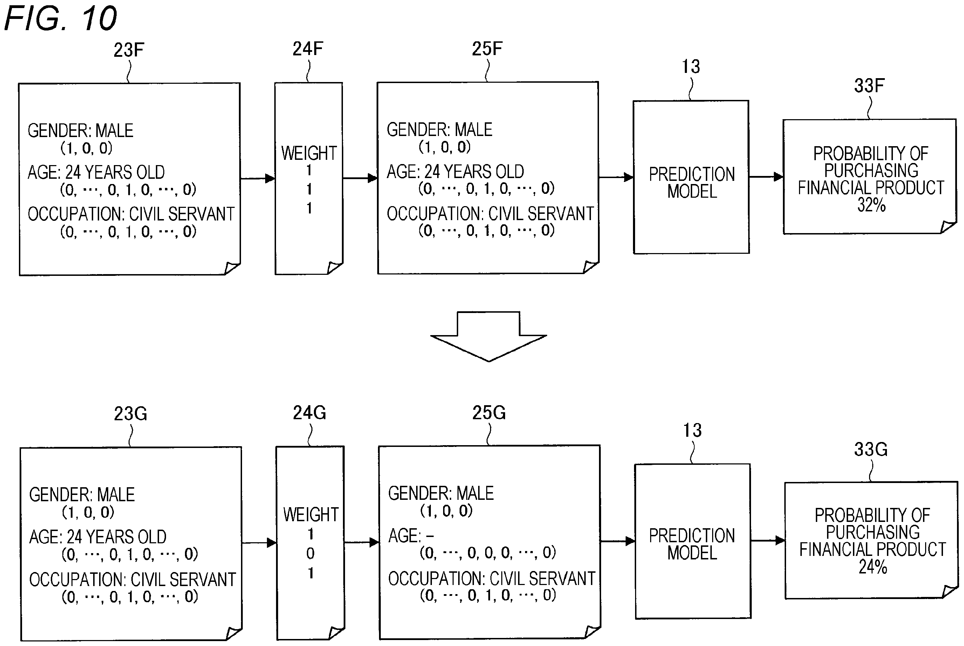

The second contribution calculation method is a method of removing the characteristic amount of the calculation target of the contribution from the input to the prediction model and calculating the contribution on the basis of change in the prediction result before and after the removal. Specifically, the information processing apparatus 100 calculates, as the contribution of the first characteristic amount and the second characteristic amount, a difference between the prediction result obtained by inputting the first characteristic amount and the second characteristic amount to the prediction model, and the prediction result obtained by removing the characteristic amount of the calculation target of the contribution from the first characteristic amount and the second characteristic amount and then inputting the resultant first characteristic amount and the resultant second characteristic amount to the prediction model. Hereinafter, the second contribution calculation method will be specifically described with reference to Fig. 10.

Fig. 10 is a diagram for describing the second contribution calculation method according to the present embodiment. Here, it is assumed that the gender of a male, the age of 24 years old, and the occupation of a civil servant are extracted as the first characteristic amount and the second characteristic amount, and the characteristic amount of the calculation target of the contribution is the age of 24 years old.

As illustrated in Fig. 10, first, the information processing apparatus 100 applies a weight 24F in which all of weights are 1 to a characteristic amount vector 23F of the input data to generate a characteristic amount vector 25F including only the first characteristic amount and the second characteristic amount, and inputs the characteristic amount vector 25F to the prediction model 13. As a result, the information processing apparatus 100 obtains, as output data 33F, the prediction probability obtained by inputting the first characteristic amount and the second characteristic amount to the prediction model. For example, the probability of purchasing a financial product by the user of the age of 24 years old and the occupation of a civil servant is calculated to be 32%. Note that, in this example, since all the items of the input data correspond to the first characteristic amount or the second characteristic amount, all the weights of the weight 24F are 1. In a case where a part of the items of the input data corresponds to the first characteristic amount or the second characteristic amount, a weight in which the weight corresponding to the first characteristic amount or the second characteristic amount is 1 and the others are 0 is applied as the weight 24F.

Next, the information processing apparatus 100 applies, to a characteristic amount vector 23G of the input data, a weight 24G obtained by changing the weight corresponding to one characteristic amount of the calculation target of the contribution to 0 from the weight 24F. As a result, a characteristic amount vector 25G in which the characteristic amount of the calculation target of the contribution, of the first characteristic amount and the second characteristic amount, is 0 is obtained. The information processing apparatus 100 inputs the characteristic amount vector 25G to the prediction model 13. As a result, the information processing apparatus 100 obtains the prediction probability of a case of removing the characteristic amount of the calculation target of the contribution from the first characteristic amount and the second characteristic amount, and then inputting the resultant first characteristic amount and second characteristic amount to the prediction model 13, as output data 33G. For example, the probability of purchasing a financial product by the user of the gender of a male and the occupation of a civil servant is calculated to be 24%.

Then, the information processing apparatus 100 calculates a difference between the prediction probabilities as the contribution of the characteristic amount. Specifically, the information processing apparatus 100 determines that the characteristic amount positively contributes in a case where the prediction probability is reduced, the characteristic amount negatively contributes in a case where the prediction probability is improved, and an absolute value of the difference is the magnitude of the contribution. In the present example, the probability of purchasing a financial product is reduced from 32% to 24%, the information processing apparatus 100 determines that the contribution of the characteristic amount of the age of 24 years old is a positive contribution of 8%.

(6) Output processing

The information processing apparatus 100 (for example, the generation unit 147) generates the output information and outputs the output information from the output unit 120. The information processing apparatus 100 generates the output information on the basis of the results of the characteristic amount extraction processing and the contribution calculation processing described above.

The output information includes information based on at least one of the prediction probability obtained by inputting the first characteristic amount, the second characteristic amount, the contributions of the characteristic amounts, and the input user information to the prediction model, or the prediction probability obtained by inputting the first characteristic amount and the second characteristic amount to the prediction model. Since these pieces of information are included in the output information, the first user who has referred to the output information can take appropriate measures for the second user corresponding to the user information.

Furthermore, the user information of a plurality of users (for example, 10000 users) may be input to the information processing apparatus 100 and the extraction of the characteristic amount and the calculation of the contribution may be performed for each user information. Then, the information processing apparatus 100 may aggregate an overall tendency regarding the magnitude of the contributions and the positive/negative contributions of the characteristic amounts, and generate the output information based on the aggregation result. Such output information is particularly effective when taking measures based on the overall tendency of the plurality of users.

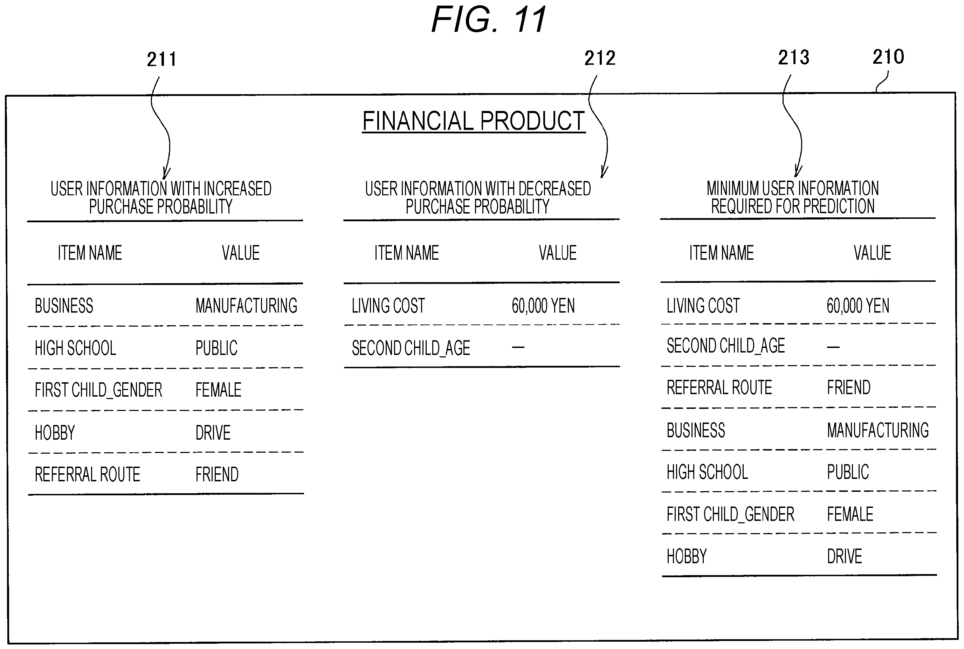

Hereinafter, as an example of the output information generated by the information processing apparatus 100, an example of a user interface (UI) generated as an image displayable on a display or the like will be described with reference to Figs. 11 to 15.

Fig. 11 is a diagram for describing an example of a UI according to the present embodiment. A UI 210 illustrated in Fig. 11 is output information regarding characteristic amounts contributing to prediction of a purchase probability of a financial product. The UI 210 includes UI elements 211, 212, and 213. In the UI element 211, the user information for increasing the purchase probability, of the input user information, in other words, the positively contributing first characteristic amounts are listed. The UI element 211 indicates that the listed first characteristic amounts positively contribute to the prediction result (the purchase probability of a financial product). In the UI element 212, the user information for decreasing the purchase probability, of the input user information, in other words, the negatively contributing second characteristic amounts are listed. The UI element 212 indicates that the listed second characteristic amounts negatively contribute to the prediction result. In the UI element 213, minimum user information necessary for prediction, of the input user information, in other words, the first characteristic amounts and the second characteristic amounts are listed. The UI element 213 indicates that the listed first characteristic amounts and second characteristic amounts contribute to the prediction result. With such a UI 210, the first user can easily recognize the first characteristic amounts and the second characteristic amounts.

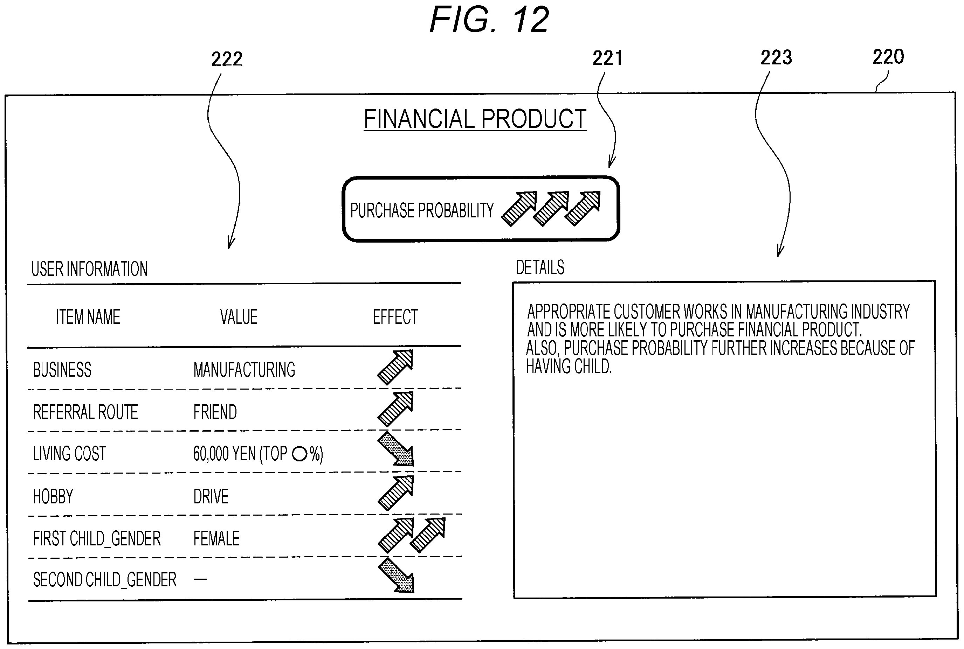

Fig. 12 is a diagram for describing an example of a UI according to the present embodiment. A UI 220 illustrated in Fig. 12 is output information regarding characteristic amounts contributing to prediction of a purchase probability of a financial product. The UI 220 includes UI elements 221, 222, and 223. The UI element 221 indicates the probability of purchasing a financial product by the user corresponding to the input user information with arrows. Specifically, a larger number of arrows represents a higher purchase probability, the upward arrow represents a higher purchase probability than an average, and a downward arrow represents a lower purchase probability than the average. The UI element 222 indicates the first characteristic amounts and the second characteristic amounts of the input user information and the contributions of the characteristic amounts using the arrows. Specifically, a larger number of arrows represents a larger contribution, an upward arrow represents having a positive contribution (in other words, improving the purchase probability), and a downward arrow represents having a negative contribution (in other words, reducing the purchase probability). The UI element 223 includes an explanatory sentence for explaining, to the first user, which characteristic amount of the second user improves the purchase probability and which characteristic amount lowers the purchase probability in an easy-to-understand manner. With such a UI 220, the first user can easily recognize the first characteristic amount and the second characteristic amount, the contributions of the characteristic amounts, and the grounds of prediction.

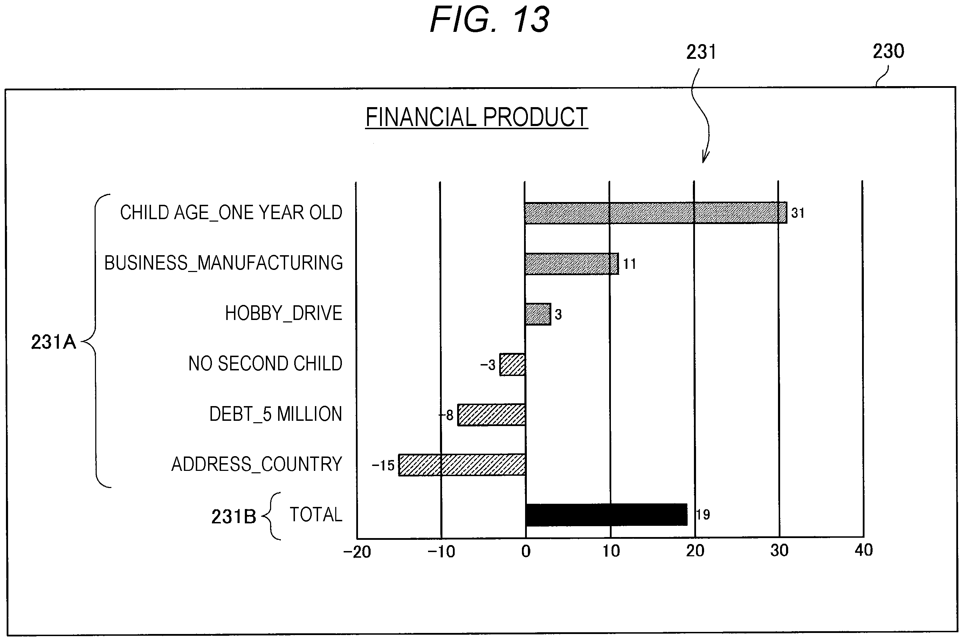

Fig. 13 is a diagram for describing an example of the UI according to the present embodiment. A UI 230 illustrated in Fig. 13 is output information regarding characteristic amounts contributing to prediction of a purchase probability of a financial product. The UI 230 includes a UI element 231. In particular, an UI element 231A is a bar graph quantitatively illustrating the contribution of the first characteristic amount and the contribution of the second characteristic amount. Specifically, the horizontal axis represents the contribution, and the bar graph extending to the right of the 0 axis indicates that the characteristic amount positively contributes and the bar graph extending to the left of the 0 axis indicates that the characteristic amount negatively contributes, and the length of the bar graph represents the magnitude of the contribution. In each bar graph, the contribution is written with a number. Furthermore, a UI element 231B is a bar graph representing a total value of the contributions of the first characteristic amount and the second characteristic amount. For example, by adding the total value of the contributions to an average purchase probability, the purchase probability of the second user corresponding to the input user information is calculated. With such a UI 230, the first user can easily recognize the first characteristic amount and the second characteristic amount, the contributions of the characteristic amounts, and the grounds of prediction.

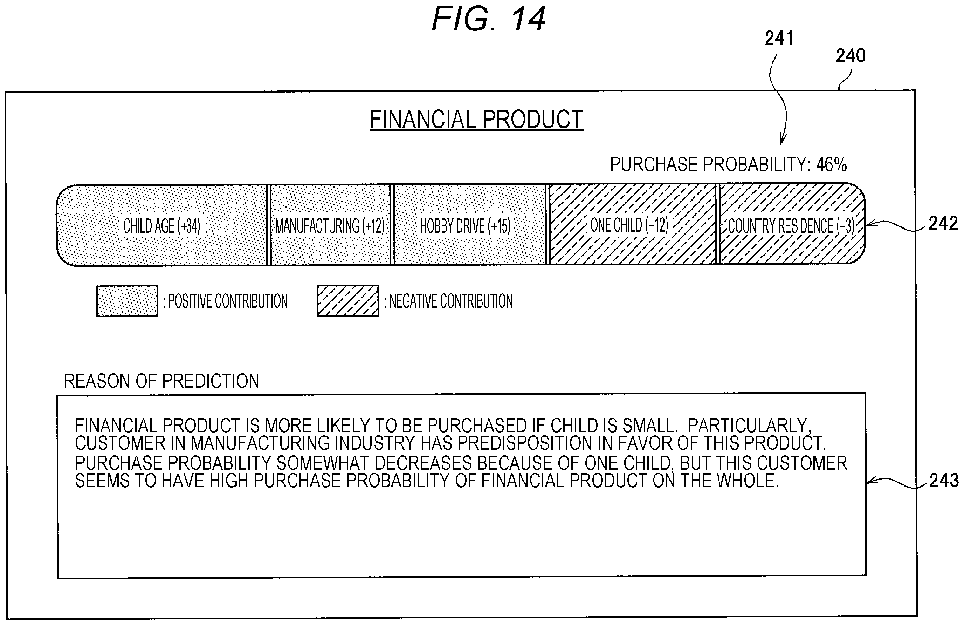

Fig. 14 is a diagram for describing an example of the UI according to the present embodiment. A UI 240 illustrated in Fig. 14 is output information regarding a characteristic amount that contributes to the prediction of the purchase probability of a financial product. The UI 240 includes UI elements 241, 242, and 243. The UI element 241 indicates the probability of purchasing a financial product by the second user corresponding to the input user information. The UI element 242 is a bar graph quantitatively illustrating the contribution of the first characteristic amount and the contribution of the second characteristic amount. Specifically, patterns of the bar graph represent positive/negative contributions of the characteristic amounts, and the length of the bar graph represents the magnitude of the contribution. The UI element 243 includes an explanatory sentence for explaining, to the first user, which characteristic amount of the second user improves the purchase probability and which characteristic amount lowers the purchase probability in an easy-to-understand manner. With such a UI 240, the first user can easily recognize the first characteristic amount and the second characteristic amount, the contributions of the characteristic amounts, and the grounds of prediction.

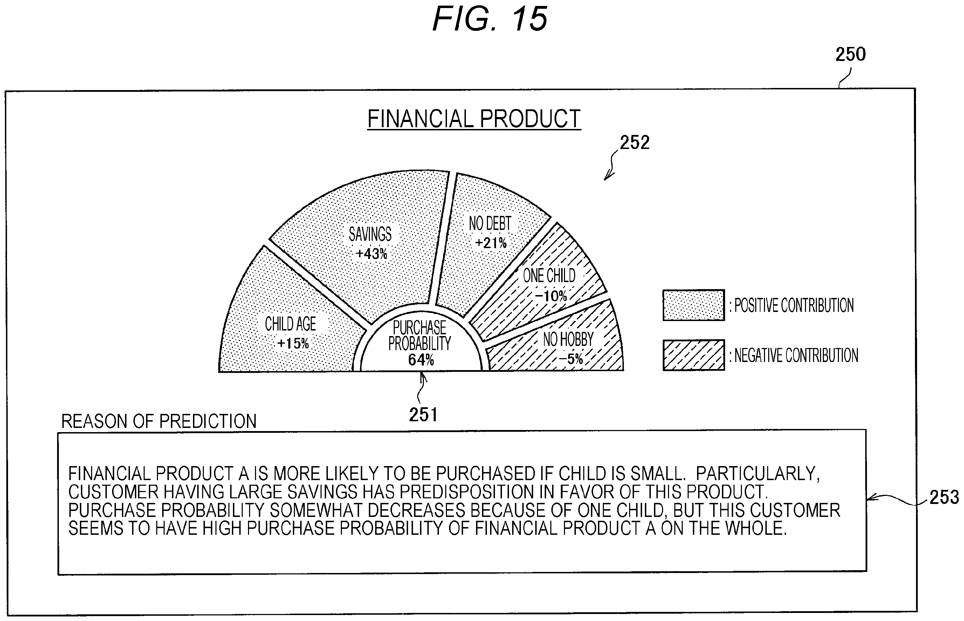

Fig. 15 is a diagram for describing an example of the UI according to the present embodiment. A UI 250 illustrated in Fig. 15 is output information regarding a characteristic amount that contributes to the prediction of the purchase probability of a financial product. The UI 250 includes UI elements 251, 252, and 253. The UI element 251 indicates the probability of purchasing a financial product by the second user corresponding to the input user information. The UI element 252 is a pie chart quantitatively illustrating the contribution of the first characteristic amount and the contribution of the second characteristic amount. Specifically, patterns of the pie chart represent positive/negative contributions of the characteristic amounts, and the size of a sector represents the magnitude of the contribution. The UI element 253 includes an explanatory sentence for explaining, to the first user, which characteristic amount of the second user improves the purchase probability and which characteristic amount lowers the purchase probability in an easy-to-understand manner. With such a UI 250, the first user can easily recognize the first characteristic amount and the second characteristic amount, the contributions of the characteristic amounts, and the grounds of prediction.

(7) Flow of processing

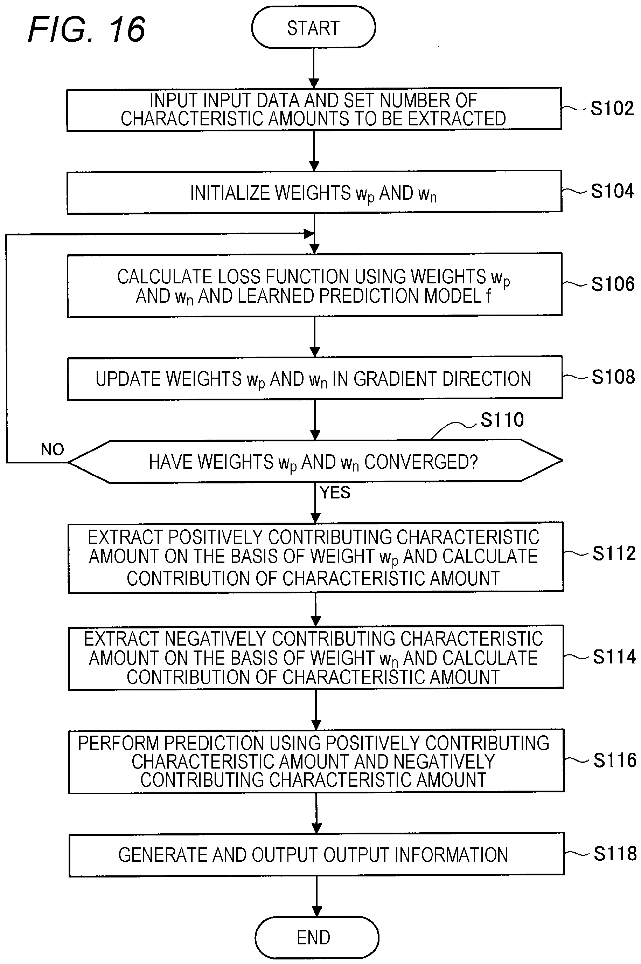

Fig. 16 is a flowchart illustrating an example of a flow of presentation processing of prediction grounds executed by the information processing apparatus 100 according to the present embodiment. As illustrated in Fig. 16, first, the information processing apparatus 100 inputs the input data and sets the number of characteristic amounts to be extracted (step S102). For example, the user information that is the item type data is input as the input data. Setting the number of characteristic amounts to be extracted corresponds to setting the predetermined values $c_1$ and $c_2$ under the constraint condition illustrated in the expression (4). Other settings such as $c_3$ may also be performed. Next, the information processing apparatus 100 initializes the weights $w_p$ and $w_n$ (step S104).

Next, the information processing apparatus 100 calculates the loss function illustrated in the expression (3) using the weights $w_p$ and $w_n$ and the learned prediction model f (step S106). Next, the information processing apparatus 100 updates the weights $w_p$ and $w_n$ in a gradient direction under the constraint condition expressed by the expression (4). Then, the information processing apparatus 100 determines whether or not the weights $w_p$ and $w_n$ have converged (step S110). The information processing apparatus 100 repeats the calculation of the loss function (step S106) and the update of the weights $w_p$ and $w_n$ (step S108) until the weights $w_p$ and $w_n$ are determined to have converged (step S110/NO). As a calculation algorithm for such an optimization problem, any algorithm can be adopted, such as a gradient descent method, a probabilistic gradient descent method such as AdaGrad or Adam, a Newton method, a linear search method, a particle filter, or a genetic algorithm.

When convergence has been determined (step S110/YES), the information processing apparatus 100 extracts the first characteristic amount that is the positively contributing characteristic amount on the basis of the weight $w_p$, and calculates the contribution of the first characteristic amount (step S112). Specifically, the characteristic amount remaining without being removed by the mask with the weight $w_p$ is extracted as the first characteristic amount. Then, the information processing apparatus 100 calculates the contribution of the first characteristic amount by the above-described first or second contribution calculation method.

Next, the information processing apparatus 100 extracts the second characteristic amount that is the negatively contributing characteristic amount on the basis of the weight $w_n$, and calculates the contribution of the second characteristic amount (step S114). Specifically, the characteristic amount remaining without being removed by the mask with the weight $w_n$ is extracted as the second characteristic amount. Then, the information processing apparatus 100 calculates the contribution of the second characteristic amount by the above-described first or second contribution calculation method.

Next, the information processing apparatus 100 performs prediction using the first characteristic amount that is the positively contributing characteristic amount and the second characteristic amount that is the negatively contributing characteristic amount (step S116). Specifically, the information processing apparatus 100 inputs the first characteristic amount and the second characteristic amount to the prediction model to obtain the prediction probability.

Then, the information processing apparatus 100 generates and outputs output information (step S118). For example, the information processing apparatus 100 generates and outputs a UI on the basis of the processing results in steps S112 to S116.

<<4. Use case>>

Hereinafter, examples of use cases of the information processing apparatus 100 according to the present embodiment will be described.

(1) First use case

The present use case relates to marketing as to which financial product is marketed to what type of customer.

First, a person in charge of financial product sales (in other words, the first user) inputs past user data and purchase results of financial products into the information processing apparatus 100 as the teacher data, thereby causing the information processing apparatus 100 to learn a prediction model for predicting what type of customer is more likely to purchase what financial product.

Next, the person in charge inputs the user information of a new customer (in other words, the second user) to the information processing apparatus 100. Thereby, the person in charge can grasp what financial product the new customer purchases at what probability, and the grounds of prediction (the first characteristic amount, the second characteristic amount, and the contributions of the characteristic amounts). The person in charge can conduct sales promotion activities to the new customer on the basis of the information.

Furthermore, the person in charge may take measures on the basis of the overall tendency of the characteristic amounts obtained by aggregation processing based on the user information of a plurality of customers. For example, in a case where a certain financial product being preferred by customers in a certain age, occupation, and area is determined as the overall tendency, the person in charge takes measures such as conducting sales promotion activities mainly for a relevant customer group, thereby trying to improve sales. Furthermore, in a case where negative contribution of the person in charge is determined, the person in charge may take measures to change the person in charge to another person, for example.

(2) Second use case

The present use case relates to prediction of a withdrawal rate for a music distribution service and measures for withdrawal prevention.

First, a person in charge of the music distribution service (in other words, the first user) inputs past user data and withdrawal results of the music distribution service into the information processing apparatus 100 as the teacher data, thereby causing the information processing apparatus 100 to learn a prediction model for predicting what type of customer is more likely to withdraw from the service.

Next, the person in charge inputs user information of a customer of interest (in other words, the second user) to the information processing apparatus 100. Thereby, the person in charge can grasp the withdrawal rate of the customer of interest, and the grounds of prediction (the first characteristic amount, the second characteristic amount, and the contributions of the characteristic amounts). The person in charge can take measures for withdrawal prevention for the customer of interest on the basis of the information.

Furthermore, the person in charge may take measures on the basis of the overall tendency of the characteristic amounts obtained by aggregation processing based on the user information of a plurality of customers. For example, in a case where the customer's withdrawal rate within 3 months of the contract being high is determined, the person in charge implements measures such as a discount campaign for those users. Furthermore, in a case where delivery of e-mail magazines and the like is determined to negatively contribute to withdrawal, the person in charge stops the delivery of e-mail magazines or the like.

(3) Third use case

The present use case relates to presentation of reasons for recommendation on an electronic commerce (EC) site and input assistance for user profiles.

First, a person in charge of the EC site (in other words, the first user) inputs past user data and purchase results into the information processing apparatus 100 as the teacher data, thereby causing the information processing apparatus 100 to learn a prediction model for predicting what type of customer is more likely to purchase what type of product. Note that the person in charge in the present example is typically artificial intelligence (AI).

Next, the person in charge inputs the user information of a new customer (in other words, the second user) to the information processing apparatus 100. Thereby, the person in charge can grasp what product the new customer purchases at what probability, and the grounds of prediction (the first characteristic amount, the second characteristic amount, and the contributions of the characteristic amounts). The person in charge can recommend a product to the new customer on the basis of the information. At that time, the person in charge presents to the new customer the grounds of prediction why the product is recommended (for example, because a certain product has been purchased in the past, or the like).

Furthermore, the person in charge may perform input assistance for user profiles on the basis of the overall tendency of the characteristic amounts obtained by aggregation processing based on the user information of a plurality of customers. For example, in a case where there is a tendency of a large contribution for a certain unentered data item, the person in charge prompts the new customer to enter the unentered data item. Thereby, the prediction accuracy can be improved and the product recommendation accuracy can be improved.

(4) Fourth use case

The present use case relates to an analysis of effects of a multivariate A/B test on a real estate property site.
For example, it is assumed that an A/B test of a web page is carried out using a viewer who browses the web page inquiring about a real estate property as a key performance indicator (KPI). Specifically, the A/B test is carried out while performing various setting changes, such as changing a displayed picture of the real estate property, changing an introduction document of the property, changing a lead, and changing a font of characters.
The person in charge of the real estate property site (that is, the first user) inputs which web page adopting which setting a viewer has browsed, and presence or absence of an inquiry about the real estate property to the information processing apparatus 100 as the teacher data. As a result, a prediction model for predicting which setting is more likely to prompt the user to make an inquiry about the real estate property is learned.
Thereby, which setting contributes to ease of the inquiry about the real estate property is extracted. Therefore, the person in charge can exclude a negatively contributing setting from the target of the A/B test or can adopt a positively contributing setting as the present implementation and make the setting available to all users.

<<5. Modification>>

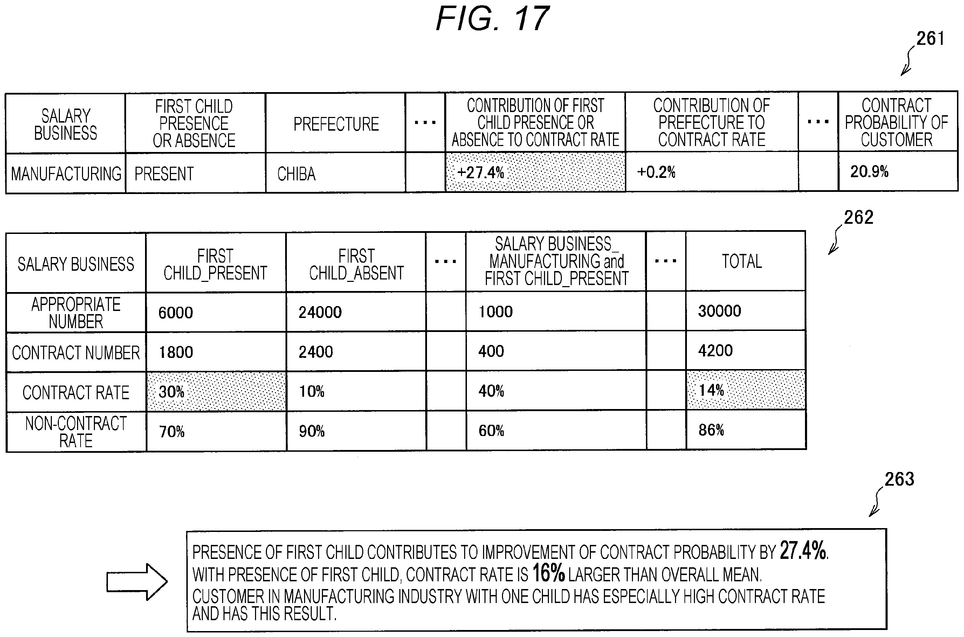

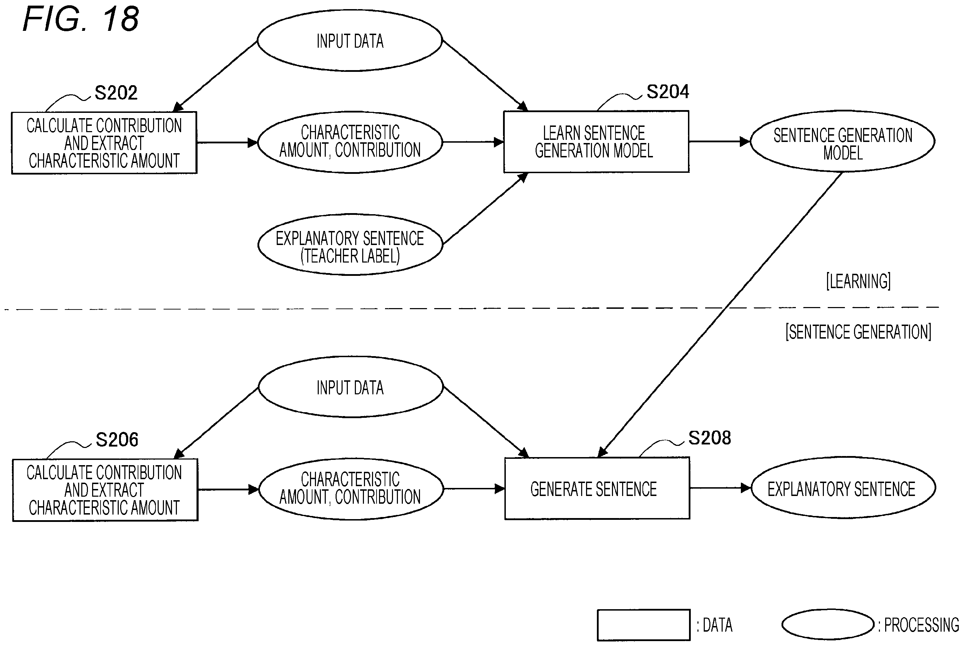

The present modification is an example of automatically generating a sentence based on an extracted characteristic amount and the contribution of the extracted characteristic amount. According to the present modification, for example, an explanatory sentence included in each of the UI element 223 in Fig. 12, the UI element 243 in Fig. 14, and the UI element 253 in Fig. 15 can be automatically generated.
The output information can include a sentence generated on the basis of the first characteristic amount and the contribution of the first characteristic amount, and/or the second characteristic amount and the contribution of the second characteristic amount. For example, the information processing apparatus 100 (for example, the generation unit 147) generates a sentence that explains the grounds of prediction on the basis of the first characteristic amount and/or the second characteristic amount having a high contribution. As a result, an explanatory sentence referring to the characteristic amount with a high contribution, which should be particularly described as the grounds of prediction, is automatically generated. Thus, the first user can easily recognize the grounds of prediction. Specific examples of the generated sentence will be described below with reference to Fig. 17.
The output information may include a sentence generated on the basis of statistics of a plurality of input data as a whole regarding the first characteristic amount and/or the second characteristic amount. For example, the information processing apparatus 100 (for example, the generation unit 147) describes a sentence describing the grounds of prediction on the basis of a comparison result between statistics of the entire input data including a specific characteristic amount and statistics of the entire input data regardless of the presence or absence of the specific characteristic amount. As a result, an explanatory sentence referring to a tendency common to customers having the specific characteristic amount and a tendency different from an overall average is automatically generated. Therefore, the first user can easily recognize how the customer's characteristic amount tends to affect the prediction. A specific example of the generated sentence will be described below with reference to Fig. 17.
Fig. 17 is a diagram for describing an example of a UI according to the present modification. Table 261 illustrates content of data including the characteristic amounts of input data of one customer, the contributions of the characteristic amounts, and a contract probability (in other words, the prediction probability). The data illustrated in Table 261 is hereinafter also referred to as individual data. Table 262 illustrates content of statistics of input data of the entire customers to be predicted. Table 262 includes the number of appropriate persons, the number of contract persons, a contract rate, and a non-contract rate, for each characteristic amount, in the input data of the entire customers. The data illustrated in Table 262 is hereinafter also referred to as common data. The information processing apparatus 100 generates an explanatory sentence 263 on the basis of the individual data and the common data. Specifically, an explanatory sentence "presence of the first child contributes improvement of the contract probability by 27.4%" is generated on the basis of the characteristic amount "first child: present" has a positive contribution of "+27.4%". Furthermore, an explanatory sentence "with the presence of the first child, the contract rate is 16% larger than the overall average" is generated on the basis of the difference between the contract rate "30%" of the customer having the characteristic amount "first child: present" and the contract rate "14%" of the entire customers.
The information processing apparatus 100 learns a sentence generation model and generates a sentence explaining the grounds of prediction using the learned sentence generation model. A series of flows will be described with reference to Fig. 18.
Fig. 18 is a diagram schematically illustrating a flow of sentence generation according to the present modification.

As illustrated in Fig. 18, first, the extraction unit 145 calculates the contribution for each of the plurality of input data, and extracts the positively contributing characteristic amount and the negatively contributing characteristic amount (step S202). Next, the learning unit 143 learns the sentence generation model using the input data, the characteristic amounts, the contributions, and the explanatory sentence explaining the grounds of prediction to be generated from the aforementioned information (in other words, a teacher label), for each of the plurality of input data, as the teacher data (step S204). Note that the teacher label can be manually generated. The above-described processing is a learning step of the sentence generation model.

Next, a sentence generation step using the learned sentence generation model will be described. First, the extraction unit 145 calculates the contribution for the input data to be predicted, and extracts the positively contributing characteristic amount and the negatively contributing characteristic amount (step S206). Next, the generation unit 147 inputs the input data to be predicted, and the characteristic amounts and the contributions extracted and calculated from the input data to be predicted to the learned sentence generation model, thereby generating the explanatory sentence explaining the grounds of prediction (step S208).

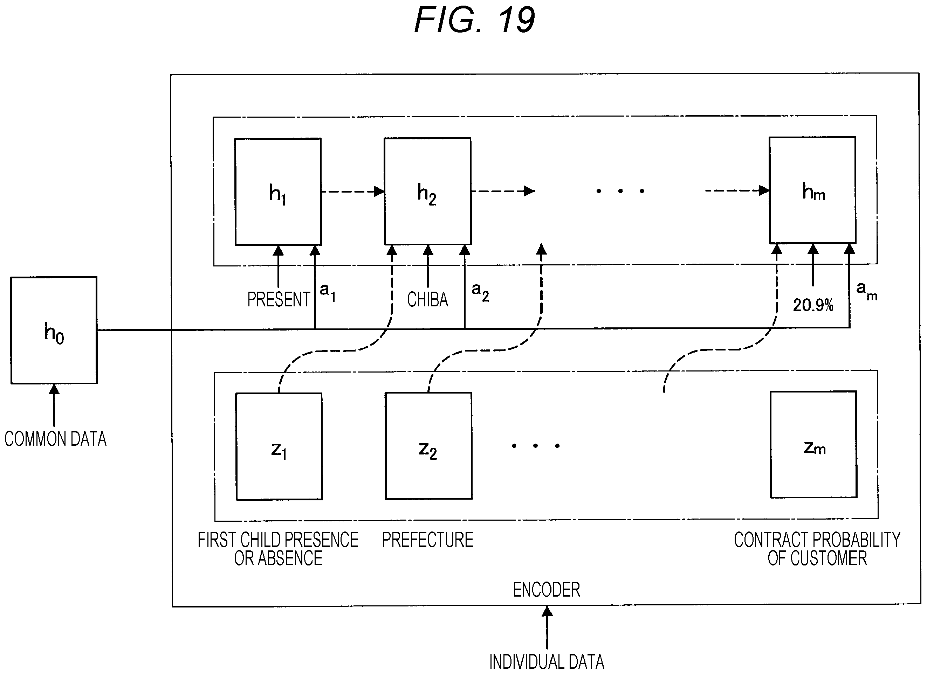

Here, a technology for converting tabular data into a sentence, called table-to-text, can be used for the generation of the sentence. There is a Seq2Seq method as one technique of the table-to-text technology. The Seq2Seq method is a technique using an encoder that breaks down tabular data into latent variables, and a decoder that configures a sentence on the basis of the latent variables. In the Seq2Seq method, a sentence generation model to input item names and item values of the tabular data as (Key, Value) into a long short-term memory (LSTM) to output a sentence of the teacher data is learned. When the tabular data is input to the learned sentence generation model, an explanatory sentence explaining the tabular data is output. The Seq2Seq method is described in detail in "Tianyu Liu, Kexiang Wang, Lei Sha, Baobao Chang and Zhifang Sui," Table-to-text Generation by Structure-aware Seq2seq Learning", AAAI, 2018.". Hereinafter, as an example, sentence generation using the Seq2Seq method will be described with reference to Fig. 19.

Fig. 19 is a diagram for describing details of the sentence generation model according to the present modification. Fig. 19 illustrates an encoder configured by LSTM. Connection by an arrow between variables indicates a time series relationship. In the Seq2Seq method, a data item is input to a field variable zi, and a data value corresponding to the data item input to the field variable zi is input to a latent variable $h_i$. In the present modification, the individual data (the characteristic amounts, the contributions, or the prediction probability) is input to the encoder. Specifically, the data items and data values of the individual data are input to the field variable $z_i$ and the latent variable $h_i$. For example, the data item "first child presence or absence" is input to $z_1$, and the characteristic amount "presence" of the data item "first child presence or absence" is input to $h_1$. Moreover, in the present modification, the common data is input to each latent variable $h_i$. Specifically, in the present modification, the common data is converted into a characteristic amount vector $h_0$ of a smaller dimension and then input to each latent variable $h_i$. In inputting the common data to the latent variable $h_i$, a weight ai is applied. Note that i is an index and is an integer of $0 \le i \le m$, and m corresponds to the number of data items included in the individual data.

In the present modification, the individual data and the common data are input to the encoder, and learning of the encoder is performed, as described above. The weight ai is also one of learning targets. By using the encoder obtained as a result of learning, a sentence based on the characteristic amount of the input data of the individual customer, the contribution of the characteristic amount, and the statistics of the entire customers regarding the characteristic amount can be automatically generated.

<<6. Hardware configuration example>>

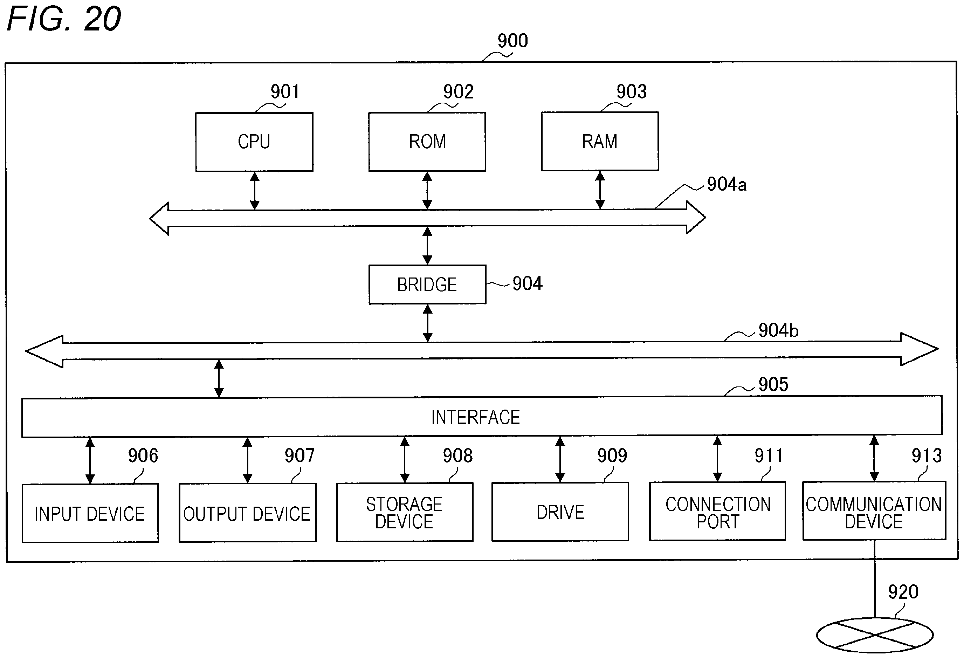

Finally, a hardware configuration of the information processing apparatus according to the present embodiment will be described with reference to Fig. 20. Fig. 20 is a block diagram illustrating an example of a hardware configuration of the information processing apparatus according to the present embodiment. Note that an information processing apparatus 900 illustrated in Fig. 20 can realize, for example, the information processing apparatus 100 illustrated in Fig. 7. The information processing by the information processing apparatus 100 according to the present embodiment is realized by cooperation of software and hardware described below.

As illustrated in Fig. 20, the information processing apparatus 900 includes a central processing unit (CPU) 901, a read only memory (ROM) 902, a random access memory (RAM) 903, and a host bus 904a. Furthermore, the information processing apparatus 900 includes a bridge 904, an external bus 904b, an interface 905, an input device 906, an output device 907, a storage device 908, a drive 909, a connection port 911, and a communication device 913. The information processing apparatus 900 may include a processing circuit such as an electric circuit, a DSP, or an ASIC instead of or in addition to the CPU 901.

The CPU 901 functions as an arithmetic processing unit and a control unit, and controls an overall operation in the information processing apparatus 900 according to various programs. Furthermore, the CPU 901 may be a microprocessor. The ROM 902 stores programs, operation parameters, and the like used by the CPU 901. The RAM 903 temporarily stores programs used in execution of the CPU 901, parameters that appropriately change in the execution, and the like. The CPU 901 can form, for example, the control unit 140 illustrated in Fig. 7. In the present embodiment, the CPU 901 performs the preprocessing for the input data, the learning of the prediction model, the extraction of the characteristic amounts, the calculation of the contribution to the characteristic amounts, and the generation of the output information.

The CPU 901, the ROM 902, and the RAM 903 are mutually connected by the host bus 904a including a CPU bus and the like. The host bus 904a is connected to the external bus 904b such as a peripheral component interconnect/interface (PCI) bus via the bridge 904. Note that the host bus 904a, the bridge 904, and the external bus 904b do not necessarily need to be separately configured, and these functions may be implemented on one bus.

The input device 906 is realized by, for example, devices to which information is input by the user, such as a mouse, a keyboard, a touch panel, a button, a microphone, a switch, and a lever. Furthermore, the input device 906 may be, for example, a remote control device using infrared rays or other radio waves, or may be an external connection device such as a mobile phone or a PDA corresponding to the operation of the information processing apparatus 900. Moreover, the input device 906 may include, for example, an input control circuit that generates an input signal on the basis of the information input by the user using the above-described input means and outputs the input signal to the CPU 901, and the like. The user of the information processing apparatus 900 can input various data and give an instruction on processing operations to the information processing apparatus 900 by operating the input device 906. The input device 906 may form, for example, the input unit 110 illustrated in Fig. 7. In the present embodiment, the input device 906 receives the teacher data, inputs of the input data of the calculation targets of the extraction of the characteristic amounts and the contribution, and an input of the setting of the number of characteristic amounts to be extracted, and the like.

The output device 907 is a device capable of visually or aurally notifying the user of acquired information. Such devices include display devices such as a CRT display device, a liquid crystal display device, a plasma display device, an EL display device, a laser projector, an LED projector, and a lamp, audio output devices such as a speaker and a headphone, a printer device, and the like. The output device 907 outputs, for example, results obtained by various types of processing performed by the information processing apparatus 900. Specifically, the display device visually displays the results obtained by the various types of processing performed by the information processing apparatus 900 in various formats such as texts, images, tables, and graphs. Meanwhile, the audio output device converts an audio signal including reproduced audio data, acoustic data, and the like into an analog signal and aurally outputs the analog signal. The output device 907 may form, for example, the output unit 120 illustrated in Fig. 7. In the present embodiment, the output device 907 outputs the output information.

The storage device 908 is a device for data storage formed as an example of a storage unit of the information processing apparatus 900. The storage device 908 is realized by, for example, a magnetic storage unit device such as an HDD, a semiconductor storage device, an optical storage device, a magneto-optical storage device, or the like. The storage device 908 may include a storage medium, a recording device that records data in the storage medium, a reading device that reads data from the storage medium, a deletion device that deletes data recorded in the storage medium, and the like. The storage device 908 stores programs executed by the CPU 901, various data, various data acquired from the outside, and the like. The storage device 908 may form, for example, the storage unit 130 illustrated in Fig. 7. In the present embodiment, the storage device 908 stores the learning result of the prediction model, the extraction result of the characteristic amount, and the contribution of the characteristic amount.

The drive 909 is a reader/writer for a storage medium, and is built in or externally attached to the information processing apparatus 900. The drive 909 reads out information recorded in a removable storage medium such as mounted magnetic disk, optical disk, magneto-optical disk, or semiconductor memory, and outputs the information to the RAM 903. Furthermore, the drive 909 can also write information to the removable storage medium.

The connection port 911 is an interface connected to an external device, and is a connection port to an external device capable of transmitting data by a universal serial bus (USB) and the like, for example.

The communication device 913 is, for example, a communication interface including a communication device and the like for being connected to a network 920. The communication device 913 is, for example, a communication card for wired or wireless local area network (LAN), long term evolution (LTE), Bluetooth (registered trademark), wireless USB (WUSB), or the like. Furthermore, the communication device 913 may also be a router for optical communication, a router for asymmetric digital subscriber line (ADSL), a modem for various communications, or the like. The communication device 913 can transmit and receive signals and the like according to a predetermined protocol such as TCP/IP and the like, for example, with the Internet or other communication devices.

Note that the network 920 is a wired or wireless transmission path of information transmitted from a device connected to the network 920. For example, the network 920 may include the Internet, a public network such as a telephone network, a satellite communication network, various local area networks (LANs) including Ethernet (registered trademark), a wide area network (WAN), or the like. Furthermore, the network 920 may include a leased line network such as an internet protocol-virtual private network (IP-VPN).

As described above, an example of the hardware configuration capable of realizing the functions of the information processing apparatus 900 according to the present embodiment has been described. Each of the above-described configuration elements may be realized using a general-purpose member or may be realized by hardware specialized for the function of each configuration element. Therefore, the hardware configuration to be used can be changed as appropriate according to the technical level of the time of carrying out the present embodiment.

Note that a computer program for realizing each function of the information processing apparatus 900 according to the above-described present embodiment can be prepared and implemented on a PC or the like. Furthermore, a computer-readable recording medium in which such a computer program is stored can also be provided. The recording medium is, for example, a magnetic disk, an optical disk, a magneto-optical disk, a flash memory, or the like. Furthermore, the above computer program may be delivered via, for example, a network without using a recording medium.

<<7. Conclusion>>

As described above, one embodiment of the present disclosure has been described in detail with reference to Figs. 1 to 20. As described above, the information processing apparatus 100 according to the present embodiment extracts the first characteristic amount positively contributing to the prediction result by the prediction model configured by the non-linear model and the second characteristic amount negatively contributing to the prediction result, from among the characteristic amounts of the input data input to the prediction model. The information processing apparatus 100 can extract not only the positively contributing first characteristic amount but also the negatively contributing second characteristic amount. Therefore, the information processing apparatus 100 can appropriately specify the grounds of the prediction even in a case where the characteristic amount negatively contributing to the prediction result exists. Furthermore, the information processing apparatus 100 can specify the minimum necessary characteristic amount contributing to the prediction.

The information processing apparatus 100 calculates the respective contributions of the first characteristic amount and the second characteristic amount. Thereby, the information processing apparatus 100 can specify the grounds of the prediction in more detail.

The information processing apparatus 100 generates and outputs the output information including the extracted first characteristic amount, the extracted second characteristic amount, the calculated contributions of the characteristic amounts, and/or the like. Thereby, the first user who has referred to the output information can take appropriate measures for the second user corresponding to the user information on the basis of the output information.

As described above, the favorable embodiments of the present disclosure have been described in detail with reference to the accompanying drawings, but the technical scope of the present disclosure is not limited to such examples. It is obvious that persons having ordinary knowledge in the technical field of the present disclosure can conceive various changes and alterations within the scope of the technical idea described in the claims, and it is naturally understood that these changes and alterations belong to the technical scope of the present disclosure.

For example, although an example in which the target data is item type data has been described in the above embodiment, the present technology is not limited to this example. For example, the target data may be an image. For example, with regard to the prediction of the purchase probability of a financial product, the information processing apparatus 100 may specify a region where a factor to improve the purchase probability and a region where an element to reduce the purchase probability, of an image capturing a customer, and may present the regions as the grounds of prediction.

Furthermore, the processing described with reference to the flowcharts and sequence diagrams in the present specification do not necessarily need to be executed in the illustrated order. Some processing steps may be executed in parallel. Furthermore, additional processing steps may be adopted and some processing steps may be omitted.

Furthermore, the effects described in the present specification are merely illustrative or exemplary and are not restrictive. That is, the technology according to the present disclosure can exhibit other effects obvious to those skilled in the art from the description of the present specification in addition to or in place of the above-described effects.

Note that the following configuration also belong to the technical scope of the present disclosure.

(1) An information processing apparatus including:
a control unit configured to extract a first characteristic amount positively contributing to a prediction result by a prediction model configured by a non-linear model and a second characteristic amount negatively contributing to the prediction result, from among characteristic amounts of input data input to the prediction model.
(2) The information processing apparatus according to (1), in which the control unit generates output information indicating that the first characteristic amount positively contributes to the prediction result and the second characteristic amount negatively contributes to the prediction result.
(3) The information processing apparatus according to (2), in which the output information includes information indicating a contribution of the first characteristic amount and a contribution of the second characteristic amount.
(4) The information processing apparatus according to (3), in which the output information includes a graph quantitatively illustrating the contribution of the first characteristic amount and the contribution of the second characteristic amount.

(5) The information processing apparatus according to (3) or (4), in which the output information includes a sentence generated on the basis of the first characteristic amount and the contribution of the first characteristic amount, and/or the second characteristic amount and the contribution of the second characteristic amount.

(6) The information processing apparatus according to any one of (1) to (5), in which
the control unit
obtains a first weight and a second weight for minimizing a loss function including
a first term having a smaller loss as the input data to which the first weight is applied more positively contributes to the prediction result, and
a second term having a smaller loss as the input data to which the second weight is applied more negatively contributes to the prediction result,
extracts a characteristic amount not removed with the first weight as the first characteristic amount, and
extracts a characteristic amount not removed with the second weight as the second characteristic amount.

(7) The information processing apparatus according to (6), in which
the control unit minimizes the loss function under a predetermined constraint condition, and
the predetermined constraint condition includes a number of the first characteristic amounts being equal to or smaller than a first threshold value and a number of the second characteristic amounts being equal to or smaller than a second threshold value.

(8) The information processing apparatus according to (7), in which the predetermined constraint condition further includes a difference being equal to or smaller than a third threshold value, the difference being between a difference between a prediction result obtained by inputting the first characteristic amount to the prediction model and a prediction result obtained by inputting the second characteristic amount to the prediction model, and a prediction result obtained by inputting the input data to the prediction model.

(9) The information processing apparatus according to any one of (1) to (8), in which the control unit calculates, as the contribution of the first characteristic amount and the second characteristic amount, a difference between an average value of the prediction results, and the prediction result obtained by inputting only one characteristic amount of a calculation target of the contribution to the prediction model.

(10) The information processing apparatus according to any one of (1) to (8), in which the control unit calculates, as the contribution of the first characteristic amount and the second characteristic amount, a difference between the prediction result obtained by inputting the first characteristic amount and the second characteristic amount to the prediction model, and the prediction result obtained by removing a characteristic amount of a calculation target of the contribution from the first characteristic amount and the second characteristic amount and then inputting the resultant first characteristic amount and the resultant second characteristic amount to the prediction model.

(11) The information processing apparatus according to any one of (1) to (10), in which the non-linear model is a neural network.

(12) The information processing apparatus according to any one of (1) to (11), in which the input data includes data of a plurality of data items.

(13) An information processing method executed by a processor, the method including:
extracting a first characteristic amount positively contributing to a prediction result by a prediction model configured by a non-linear model and a second characteristic amount negatively contributing to the prediction result, from among characteristic amounts of input data input to the prediction model.

(14) The information processing method according to (13), further including:

obtaining a first weight and a second weight for minimizing a loss function including
a first term having a smaller loss as the input data to which the first weight is applied more positively contributes to the prediction result, and
a second term having a smaller loss as the input data to which the second weight is applied more negatively contributes to the prediction result;
extracting a characteristic amount not removed with the first weight as the first characteristic amount; and
extracting a characteristic amount not removed with the second weight as the second characteristic amount.

(15) The information processing method according to (14), further including:

minimizing the loss function under a predetermined constraint condition,
the predetermined constraint condition including a number of the first characteristic amounts being equal to or smaller than a first threshold value and a number of the second characteristic amounts being equal to or smaller than a second threshold value.

(16) The information processing method according to (15), in which the predetermined constraint condition further includes a difference being equal to or smaller than a third threshold value, the difference being between a difference between a prediction result obtained by inputting the first characteristic amount to the prediction model and a prediction result obtained by inputting the second characteristic amount to the prediction model, and a prediction result obtained by inputting the input data to the prediction model.

(17) The information processing method according to any one of (13) to (16), further including:

calculating, as the contribution of the first characteristic amount and the second characteristic amount, a difference between an average value of the prediction results, and the prediction result obtained by inputting only one characteristic amount of a calculation target of the contribution to the prediction model.

(18) The information processing method according to any one of (13) to (16), further including:

calculating, as the contribution of the first characteristic amount and the second characteristic amount, a difference between the prediction result obtained by inputting the first characteristic amount and the second characteristic amount to the prediction model, and the prediction result obtained by removing a characteristic amount of a calculation target of the contribution from the first characteristic amount and the second characteristic amount and then inputting the resultant first characteristic amount and the resultant second characteristic amount to the prediction model.

(19) A program for causing a computer to function as:

a control unit configured to extract a first characteristic amount positively contributing to a prediction result by a prediction model configured by a non-linear model and a second characteristic amount negatively contributing to the prediction result, from among characteristic amounts of input data input to the prediction model.

REFERENCE SIGNS LIST

100    Information processing apparatus
110    Input unit
120    Output unit
130    Storage unit
140    Control unit
141    Preprocessing unit
143    Learning unit
145    Extraction unit
147    Generation unit

**Claims**

1. An information processing apparatus comprising:

   a control unit configured to extract a first characteristic amount positively contributing to a prediction result by a prediction model configured by a non-linear model and a second characteristic amount negatively contributing to the prediction result, from among characteristic amounts of input data input to the prediction model.

2. The information processing apparatus according to claim 1, wherein the control unit generates output information indicating that the first characteristic amount positively contributes to the prediction result and the second characteristic amount negatively contributes to the prediction result.

3. The information processing apparatus according to claim 2, wherein the output information includes information indicating a contribution of the first characteristic amount and a contribution of the second characteristic amount.

4. The information processing apparatus according to claim 3, wherein the output information includes a graph quantitatively illustrating the contribution of the first characteristic amount and the contribution of the second characteristic amount.

5. The information processing apparatus according to claim 3, wherein the output information includes a sentence generated on a basis of the first characteristic amount and the contribution of the first characteristic amount, and/or the second characteristic amount and the contribution of the second characteristic amount.

6. The information processing apparatus according to claim 1, wherein

the control unit
obtains a first weight and a second weight for minimizing a loss function including
a first term having a smaller loss as the input data to which the first weight is applied more positively contributes to the prediction result, and
a second term having a smaller loss as the input data to which the second weight is applied more negatively contributes to the prediction result,
extracts a characteristic amount not removed with the first weight as the first characteristic amount, and
extracts a characteristic amount not removed with the second weight as the second characteristic amount.

7.  The information processing apparatus according to claim 6, wherein
    the control unit minimizes the loss function under a predetermined constraint condition, and
    the predetermined constraint condition includes a number of the first characteristic amounts being equal to or smaller than a first threshold value and a number of the second characteristic amounts being equal to or smaller than a second threshold value.

8.  The information processing apparatus according to claim 7, wherein the predetermined constraint condition further includes a difference being equal to or smaller than a third threshold value, the difference being between a difference between a prediction result obtained by inputting the first characteristic amount to the prediction model and a prediction result obtained by inputting the second characteristic amount to the prediction model, and a prediction result obtained by inputting the input data to the prediction model.

9.  The information processing apparatus according to claim 1, wherein the control unit calculates, as the contribution of the first characteristic amount and the second characteristic amount, a difference between an average value of the prediction results, and the prediction result obtained by inputting only one characteristic amount of a calculation target of the contribution to the prediction model.

10. The information processing apparatus according to claim 1, wherein the control unit calculates, as the contribution of the first characteristic amount and the second characteristic amount, a difference between the prediction result obtained by inputting the first characteristic amount and the second characteristic amount to the prediction model, and the prediction result obtained by removing a characteristic amount of a calculation target of the contribution from the first characteristic amount and the second characteristic amount and then inputting the resultant first characteristic amount and the resultant second characteristic amount to the prediction model.

11. The information processing apparatus according to claim 1, wherein the non-linear model is a neural network.

12. The information processing apparatus according to claim 1, wherein the input data includes data of a plurality of data items.

13. An information processing method executed by a processor, the method comprising:
    extracting a first characteristic amount positively contributing to a prediction result by a prediction model configured by a non-linear model and a second characteristic amount negatively contributing to the prediction result, from among characteristic amounts of input data input to the prediction model.

14. The information processing method according to claim 13, further comprising:

    obtaining a first weight and a second weight for minimizing a loss function including
    a first term having a smaller loss as the input data to which the first weight is applied more positively contributes to the prediction result, and
    a second term having a smaller loss as the input data to which the second weight is applied more negatively contributes to the prediction result;
    extracting a characteristic amount not removed with the first weight as the first characteristic amount; and
    extracting a characteristic amount not removed with the second weight as the second characteristic amount.

15. The information processing method according to claim 14, further comprising:

    minimizing the loss function under a predetermined constraint condition,
    the predetermined constraint condition including a number of the first characteristic amounts being equal to or smaller than a first threshold value and a number of the second characteristic amounts being equal to or smaller than a second threshold value.

16. The information processing method according to claim 15, wherein the predetermined constraint condition further includes a difference being equal to or smaller than a third threshold value, the difference being between a difference between a prediction result obtained by inputting the first characteristic amount to the prediction model and a prediction result obtained by inputting the second characteristic amount to the prediction model, and a prediction result obtained by inputting the input data to the prediction model.

17. The information processing method according to claim 13, further comprising:
calculating, as the contribution of the first characteristic amount and the second characteristic amount, a difference between an average value of the prediction results, and the prediction result obtained by inputting only one characteristic amount of a calculation target of the contribution to the prediction model.

18. The information processing method according to claim 13, further comprising:
calculating, as the contribution of the first characteristic amount and the second characteristic amount, a difference between the prediction result obtained by inputting the first characteristic amount and the second characteristic amount to the prediction model, and the prediction result obtained by removing a characteristic amount of a calculation target of the contribution from the first characteristic amount and the second characteristic amount and then inputting the resultant first characteristic amount and the resultant second characteristic amount to the prediction model.

19. A program for causing a computer to function as:
a control unit configured to extract a first characteristic amount positively contributing to a prediction result by a prediction model configured by a non-linear model and a second characteristic amount negatively contributing to the prediction result, from among characteristic amounts of input data input to the prediction model.

# FIG. 1

# FIG. 2

21A

11

PREDICTION MODEL

31A

DOG

21B

11

PREDICTION MODEL

31B

DOG

FIG. 3

WEIGHT w

CHARACTERISTIC AMOUNT 1

CHARACTERISTIC AMOUNT 2

CHARACTERISTIC AMOUNT m

INPUT DATA

11

PREDICTION MODEL

31

PREDICTION PROBABILITY

21A

21B

EP 3 588 392 A1

## FIG. 4

22A

AGE: 24 YEARS OLD
GENDER: MALE
OCCUPATION: CIVIL SERVANT
FAMILY MEMBERS: WIFE AND ONE CHILD
RESIDENCE: URBAN AREA
SAVINGS: 4 MILLION YEN
HOUSE RENT: 70,000 YEN
DEBT: 3 MILLION YEN
HOBBY: TRAVEL

12

PREDICTION
MODEL

32A

PROBABILITY OF
PURCHASING
FINANCIAL PRODUCT
30%

EP 3 588 392 A1

## FIG. 5

22B

```
AGE: 24 YEARS OLD
GENDER: –
OCCUPATION: –
FAMILY MEMBERS: WIFE AND ONE CHILD
RESIDENCE: –
SAVINGS: 4 MILLION YEN
HOUSE RENT: –
DEBT: –
HOBBY: –
```

12

PREDICTION
MODEL

32B

PROBABILITY OF
PURCHASING
FINANCIAL PRODUCT
80%

EP 3 588 392 A1

## FIG. 6

22C

```
AGE: 24 YEARS OLD
GENDER: –
OCCUPATION: –
FAMILY MEMBERS: WIFE AND ONE CHILD
RESIDENCE: –
SAVINGS: 4 MILLION YEN
HOUSE RENT: –
DEBT: 3 MILLION YEN
HOBBY: TRAVEL
```

12

PREDICTION
MODEL

32C

PROBABILITY OF
PURCHASING
FINANCIAL PRODUCT
30%

## FIG. 7

100

140 CONTROL UNIT

141 PREPROCESSING UNIT

110 INPUT UNIT

143 LEARNING UNIT

145 EXTRACTION UNIT

147 GENERATION UNIT

120 OUTPUT UNIT

130 STORAGE UNIT

# FIG. 8

INPUT DATA

CHARACTERISTIC AMOUNT 1
CHARACTERISTIC AMOUNT 2
CHARACTERISTIC AMOUNT n

WEIGHT $w_p$

WEIGHT $w_n$

PREDICTION MODEL — 13

PREDICTION PROBABILITY — 33

AGE: 24 YEARS OLD
FAMILY MEMBERS: WIFE AND ONE CHILD
SAVINGS: 4 MILLION YEN — 23B

AGE: 24 YEARS OLD
GENDER: MALE
OCCUPATION: CIVIL SERVANT
FAMILY MEMBERS: WIFE AND ONE CHILD
RESIDENCE: URBAN AREA
SAVINGS: 4 MILLION YEN
HOUSE RENT: 70,000 YEN
DEBT: 3 MILLION YEN
HOBBY: TRAVEL — 23A

DEBT: 3 MILLION YEN
HOBBY: TRAVEL — 23C

## FIG. 9

23D
```
GENDER: MALE
  (1, 0, 0)
AGE: 24 YEARS OLD
  (0, ···, 0, 1, 0, ···, 0)
OCCUPATION: CIVIL SERVANT
  (0, ···, 0, 1, 0, ···, 0)
```

24D
```
WEIGHT
  0
  0
  0
```

25D
```
GENDER: –
  (0, 0, 0)
AGE: –
  (0, ···, 0, 0, 0, ···, 0)
OCCUPATION: –
  (0, ···, 0, 0, 0, ···, 0)
```

13
```
PREDICTION
MODEL
```

33D
```
PROBABILITY OF
PURCHASING
FINANCIAL PRODUCT
12%
```

23E
```
GENDER: MALE
  (1, 0, 0)
AGE: 24 YEARS OLD
  (0, ···, 0, 1, 0, ···, 0)
OCCUPATION: CIVIL SERVANT
  (0, ···, 0, 1, 0, ···, 0)
```

24E
```
WEIGHT
  0
  1
  0
```

25E
```
GENDER: –
  (0, 0, 0)
AGE: 24 YEARS OLD
  (0, ···, 0, 1, 0, ···, 0)
OCCUPATION: –
  (0, ···, 0, 0, 0, ···, 0)
```

13
```
PREDICTION
MODEL
```

33E
```
PROBABILITY OF
PURCHASING
FINANCIAL PRODUCT
20%
```

EP 3 588 392 A1

# FIG. 10

**23F**

GENDER: MALE
(1, 0, 0)

AGE: 24 YEARS OLD
(0, ···, 0, 1, 0, ···, 0)

OCCUPATION: CIVIL SERVANT
(0, ···, 0, 1, 0, ···, 0)

**24F**

WEIGHT
1
1
1

**25F**

GENDER: MALE
(1, 0, 0)

AGE: 24 YEARS OLD
(0, ···, 0, 1, 0, ···, 0)

OCCUPATION: CIVIL SERVANT
(0, ···, 0, 1, 0, ···, 0)

**13**

PREDICTION MODEL

**33F**

PROBABILITY OF PURCHASING FINANCIAL PRODUCT
32%

**23G**

GENDER: MALE
(1, 0, 0)

AGE: 24 YEARS OLD
(0, ···, 0, 1, 0, ···, 0)

OCCUPATION: CIVIL SERVANT
(0, ···, 0, 1, 0, ···, 0)

**24G**

WEIGHT
1
0
1

**25G**

GENDER: MALE
(1, 0, 0)

AGE: –
(0, ···, 0, 0, 0, ···, 0)

OCCUPATION: CIVIL SERVANT
(0, ···, 0, 1, 0, ···, 0)

**13**

PREDICTION MODEL

**33G**

PROBABILITY OF PURCHASING FINANCIAL PRODUCT
24%

EP 3 588 392 A1

## FIG. 11

### FINANCIAL PRODUCT

**USER INFORMATION WITH INCREASED PURCHASE PROBABILITY** (211)

| ITEM NAME | VALUE |
|---|---|
| BUSINESS | MANUFACTURING |
| HIGH SCHOOL | PUBLIC |
| FIRST CHILD_GENDER | FEMALE |
| HOBBY | DRIVE |
| REFERRAL ROUTE | FRIEND |

**USER INFORMATION WITH DECREASED PURCHASE PROBABILITY** (212)

| ITEM NAME | VALUE |
|---|---|
| LIVING COST | 60,000 YEN |
| SECOND CHILD_AGE | — |

**MINIMUM USER INFORMATION REQUIRED FOR PREDICTION** (213)

| ITEM NAME | VALUE |
|---|---|
| LIVING COST | 60,000 YEN |
| SECOND CHILD_AGE | — |
| REFERRAL ROUTE | FRIEND |
| BUSINESS | MANUFACTURING |
| HIGH SCHOOL | PUBLIC |
| FIRST CHILD_GENDER | FEMALE |
| HOBBY | DRIVE |

210

EP 3 588 392 A1

FIG. 12

222     221     223     220

FINANCIAL PRODUCT

PURCHASE PROBABILITY

USER INFORMATION

| ITEM NAME | VALUE | EFFECT |
|---|---|---|
| BUSINESS | MANUFACTURING | |
| REFERRAL ROUTE | FRIEND | |
| LIVING COST | 60,000 YEN (TOP ○ %) | |
| HOBBY | DRIVE | |
| FIRST CHILD_GENDER | FEMALE | |
| SECOND CHILD_GENDER | — | |

DETAILS

APPROPRIATE CUSTOMER WORKS IN MANUFACTURING INDUSTRY AND IS MORE LIKELY TO PURCHASE FINANCIAL PRODUCT.
ALSO, PURCHASE PROBABILITY FURTHER INCREASES BECAUSE OF HAVING CHILD.

EP 3 588 392 A1

FIG. 13

231    230

FINANCIAL PRODUCT

|  | -20 | -10 | 0 | 10 | 20 | 30 | 40 |
|---|---|---|---|---|---|---|---|

CHILD AGE_ONE YEAR OLD — 31

BUSINESS_MANUFACTURING — 11

HOBBY_DRIVE — 3

NO SECOND CHILD — -3

DEBT_5 MILLION — -8

ADDRESS_COUNTRY — -15

231A

231B { TOTAL — 19

EP 3 588 392 A1

## FIG. 14

FINANCIAL PRODUCT

PURCHASE PROBABILITY: 46%

| CHILD AGE (+34) | MANUFACTURING (+12) | HOBBY DRIVE (+15) | ONE CHILD (-12) | COUNTRY RESIDENCE (-3) |

☐ : POSITIVE CONTRIBUTION    ▨ : NEGATIVE CONTRIBUTION

REASON OF PREDICTION

FINANCIAL PRODUCT IS MORE LIKELY TO BE PURCHASED IF CHILD IS SMALL. PARTICULARLY, CUSTOMER IN MANUFACTURING INDUSTRY HAS PREDISPOSITION IN FAVOR OF THIS PRODUCT. PURCHASE PROBABILITY SOMEWHAT DECREASES BECAUSE OF ONE CHILD, BUT THIS CUSTOMER SEEMS TO HAVE HIGH PURCHASE PROBABILITY OF FINANCIAL PRODUCT ON THE WHOLE.

EP 3 588 392 A1

## FIG. 15

FINANCIAL PRODUCT

250

252

CHILD AGE +15%

SAVINGS +43%

NO DEBT +21%

ONE CHILD −10%

NO HOBBY −5%

PURCHASE PROBABILITY 64%

251

: POSITIVE CONTRIBUTION

: NEGATIVE CONTRIBUTION

REASON OF PREDICTION

FINANCIAL PRODUCT A IS MORE LIKELY TO BE PURCHASED IF CHILD IS SMALL. PARTICULARLY, CUSTOMER HAVING LARGE SAVINGS HAS PREDISPOSITION IN FAVOR OF THIS PRODUCT. PURCHASE PROBABILITY SOMEWHAT DECREASES BECAUSE OF ONE CHILD, BUT THIS CUSTOMER SEEMS TO HAVE HIGH PURCHASE PROBABILITY OF FINANCIAL PRODUCT A ON THE WHOLE.

253

EP 3 588 392 A1

## FIG. 16

```
                    ( START )
                        │
                        ▼
┌─────────────────────────────────────────────────┐
│  INPUT INPUT DATA AND SET NUMBER OF               │── S102
│  CHARACTERISTIC AMOUNTS TO BE EXTRACTED           │
└─────────────────────────────────────────────────┘
                        │
                        ▼
┌─────────────────────────────────────────────────┐
│       INITIALIZE WEIGHTS wp AND wn                │── S104
└─────────────────────────────────────────────────┘
                        │
            ┌───────────┤
            │           ▼
            │  ┌─────────────────────────────────────────┐
            │  │ CALCULATE LOSS FUNCTION USING WEIGHTS wp │── S106
            │  │ AND wn AND LEARNED PREDICTION MODEL f     │
            │  └─────────────────────────────────────────┘
            │           │
            │           ▼
            │  ┌─────────────────────────────────────────┐
            │  │ UPDATE WEIGHTS wp AND wn IN GRADIENT     │── S108
            │  │ DIRECTION                                │
            │  └─────────────────────────────────────────┘
            │           │
            │           ▼      S110
      NO    ◇───────────────────────────────────◇
    └───────┤ HAVE WEIGHTS wp AND wn CONVERGED?   │
            ◇───────────────────────────────────◇
                        │ YES
                        ▼
```

Flow steps:

- INPUT INPUT DATA AND SET NUMBER OF CHARACTERISTIC AMOUNTS TO BE EXTRACTED — S102
- INITIALIZE WEIGHTS $w_p$ AND $w_n$ — S104
- CALCULATE LOSS FUNCTION USING WEIGHTS $w_p$ AND $w_n$ AND LEARNED PREDICTION MODEL f — S106
- UPDATE WEIGHTS $w_p$ AND $w_n$ IN GRADIENT DIRECTION — S108
- HAVE WEIGHTS $w_p$ AND $w_n$ CONVERGED? — S110 (NO → loop back to S106; YES → continue)
- EXTRACT POSITIVELY CONTRIBUTING CHARACTERISTIC AMOUNT ON THE BASIS OF WEIGHT $w_p$ AND CALCULATE CONTRIBUTION OF CHARACTERISTIC AMOUNT — S112
- EXTRACT NEGATIVELY CONTRIBUTING CHARACTERISTIC AMOUNT ON THE BASIS OF WEIGHT $w_n$ AND CALCULATE CONTRIBUTION OF CHARACTERISTIC AMOUNT — S114
- PERFORM PREDICTION USING POSITIVELY CONTRIBUTING CHARACTERISTIC AMOUNT AND NEGATIVELY CONTRIBUTING CHARACTERISTIC AMOUNT — S116
- GENERATE AND OUTPUT OUTPUT INFORMATION — S118
- END

## FIG. 17

261

| SALARY BUSINESS | FIRST CHILD PRESENCE OR ABSENCE | PREFECTURE | ... | CONTRIBUTION OF FIRST CHILD PRESENCE OR ABSENCE TO CONTRACT RATE | CONTRIBUTION OF PREFECTURE TO CONTRACT RATE | ... | CONTRACT PROBABILITY OF CUSTOMER |
|---|---|---|---|---|---|---|---|
| MANUFACTURING | PRESENT | CHIBA | | +27.4% | +0.2% | | 20.9% |

262

| SALARY BUSINESS | FIRST CHILD_PRESENT | FIRST CHILD_ABSENT | ... | SALARY BUSINESS_ MANUFACTURING and FIRST CHILD_PRESENT | ... | TOTAL |
|---|---|---|---|---|---|---|
| APPROPRIATE NUMBER | 6000 | 24000 | | 1000 | | 30000 |
| CONTRACT NUMBER | 1800 | 2400 | | 400 | | 4200 |
| CONTRACT RATE | 30% | 10% | | 40% | | 14% |
| NON-CONTRACT RATE | 70% | 90% | | 60% | | 86% |

263

PRESENCE OF FIRST CHILD CONTRIBUTES TO IMPROVEMENT OF CONTRACT PROBABILITY BY **27.4%**.
WITH PRESENCE OF FIRST CHILD, CONTRACT RATE IS **16%** LARGER THAN OVERALL MEAN.
CUSTOMER IN MANUFACTURING INDUSTRY WITH ONE CHILD HAS ESPECIALLY HIGH CONTRACT RATE AND HAS THIS RESULT.

EP 3 588 392 A1

## FIG. 18

INPUT DATA

S202
CALCULATE CONTRIBUTION AND EXTRACT CHARACTERISTIC AMOUNT

CHARACTERISTIC AMOUNT, CONTRIBUTION

EXPLANATORY SENTENCE (TEACHER LABEL)

S204
LEARN SENTENCE GENERATION MODEL

SENTENCE GENERATION MODEL

[LEARNING]

[SENTENCE GENERATION]

INPUT DATA

S206
CALCULATE CONTRIBUTION AND EXTRACT CHARACTERISTIC AMOUNT

CHARACTERISTIC AMOUNT, CONTRIBUTION

S208
GENERATE SENTENCE

EXPLANATORY SENTENCE

☐ : DATA          ⬭ : PROCESSING

EP 3 588 392 A1

FIG. 19

FIG. 20

EP 3 588 392 A1

**EP 3 588 392 A1**

<div align="center">

**INTERNATIONAL SEARCH REPORT**

</div>

| International application No. |
| --- |
| PCT/JP2018/044108 |

A. CLASSIFICATION OF SUBJECT MATTER
Int.Cl. G06N20/00(2019.01)i, G06N99/00(2019.01)i
According to International Patent Classification (IPC) or to both national classification and IPC

B. FIELDS SEARCHED

Minimum documentation searched (classification system followed by classification symbols)
Int.Cl. G06N20/00, G06N99/00

| Documentation searched other than minimum documentation to the extent that such documents are included in the fields searched | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X | JP 2016-18358 A (FUJITSU LTD.) 01 February 2016, | 1, 11–13, 19 |
| Y | paragraphs [0010]-[0017], fig. 1 & US 2016/0012333 | 2–5 |
| A | A1, paragraphs [0022]-[0030], fig. 1 | 6–10, 14–18 |
| Y | JP 2016-148927 A (NIPPON TELEGRAPH AND TELEPHONE CORP.) 18 August 2016, paragraphs [0067]-[0068], fig. 5 (Family: none) | 2–5 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 06 February 2019 (06.02.2019) | 19 February 2019 (19.02.2019) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

<div align="center">

42

</div>

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017123088 A

**Non-patent literature cited in the description**

- **TIANYU LIU ; KEXIANG WANG ; LEI SHA ; BAOBAO CHANG ; ZHIFANG SUI.** Table-to-text Generation by Structure-aware Seq2seq Learning. *AAAI,* 2018